# EUROPÄISCHE PATENTSCHRIFT

(11) **EP 3 755 492 B1**
(45) Veröffentlichungstag und Bekanntmachung des Hinweises auf die Patenterteilung: **16.04.2025**
(21) Anmeldenummer: 19706605.3
(22) Anmeldetag: 20.02.2019
(51) Int. Cl.: B23K 26/26, B23K 26/242

(54) **VERFAHREN ZUM FÜGEN ZWEIER BAUTEILE MITEINANDER DURCH LASERSCHWEISSEN**
METHOD FOR JOINING TWO COMPONENTS TO ONE ANOTHER BY MEANS OF LASER WELDING
PROCÉDÉ DESTINÉ À ASSEMBLER DEUX MODULES L'UN AVEC L'AUTRE PAR SOUDAGE AU LASER

(30) Priorität: 23.02.2018 DE 102018202810; 28.02.2018 DE 102018202997; 09.05.2018 DE 102018207322; 19.09.2018 DE 102018215985
(43) Veröffentlichungstag der Anmeldung: 30.12.2020
(73) Patentinhaber: WLLT GMBH, 75228 Ispringen (DE)
(72) Erfinder: WAGNER, Reiner, 75228 Ispringen (DE)
(74) Vertreter: Kordel, Mattias
(86) Internationale Anmeldenummer: PCT/EP2019/054248
(87) Internationale Veröffentlichungsnummer: WO 2019/162348

(56) Entgegenhaltungen:
- EP-A1- 1 518 633
- DE-A1- 102016 001 270
- DE-A1- 19 712 730
- JP-A- H03 138 091
- US-B1- 6 300 591

## Beschreibung

Die Erfindung betrifft ein Verfahren zum Fügen zweier Bauteile miteinander durch Laserschweißen sowie eine Bauteil-Anordnung zweier mittels Laser-Wärmeleitungsschweißen miteinander gefügter Bauteile.

Zum Fügen von Bauteilen durch Laserschweißen sind im Wesentlichen zwei Verfahrensregime bekannt, die auf einer Skala der Leistungsdichte der verwendeten Laserstrahlung voneinander unterschieden werden. Dabei existiert ein erstes Regime des sogenannten Wärmeleitungsschweißens, das auch als Wärmeleitungsnahtschweißen bezeichnet wird. Dieses Regime ist bei Leistungsdichten bis zu einer Größenordnung von 10⁵ W/cm² gegeben. Hierbei wird eine Oberfläche der zu fügenden Bauteile so stark erhitzt, dass lokal begrenzt ein Schmelzprozess einsetzt. Die dabei von den Bauteilen absorbierte Energie gelangt durch Wärmeleitung ins Bauteilinnere. Eine durch Wärmeleitungsschweißen gebildete Schweißnaht weist - im Querschnitt oder Schliffbild gesehen - typischerweise eine linsenförmige Nahtgeometrie mit einem geringen Aspektverhältnis auf, wobei eine Nahttiefe typischerweise geringer, höchstens aber gleich groß ist wie eine Nahtbreite. Wird die Leistungsdichte an der Oberfläche der Bauteile auf eine Größenordnung von einigen 10⁵ W/cm² bis zu einigen 10⁶ W/cm² erhöht, setzt ein starker Verdampfungsprozess ein. Dabei wird eine Dampfkapillare ausgebildet, die wesentlich für das Reflexions- und Absorptionsverhalten der Laserstrahlung ist. Gerade aufgrund der Dampfkapillare wird ein wesentlicher Teil der eingestrahlten Energie in den Fügebereich einkoppelt. Weiterhin kann die Laserstrahlung aufgrund der Dampfkapillare viel tiefer in die zu fügenden Bauteile eindringen, woraus sich auch die Bezeichnung "Tiefschweißen" für dieses Schweißregime herleitet. Durch Tiefschweißen gebildete Laserschweißnähte weisen ein Aspektverhältnis von größer als 1, typischerweise von größer als 2 auf, wobei die Nahttiefe mehr als doppelt so groß ist als die Nahtbreite.

Problematisch an dem Regime des Tiefschweißens ist, dass oxidationsempfindliche Materialien nicht zuverlässig geschweißt werden können, da sie gerade aufgrund der Ausbildung einer Dampfkapillare Oxide bilden, welche zu einem Verspröden und damit zu einer geringen Festigkeit der gebildeten Laserschweißnaht beitragen. Aufgrund der hohen in den Fügebereich eingekoppelten Leistung kommt es zu Spritzern, was häufig die Ausbildung einer glatten Schweißnaht verhindert und zur Entstehung von Poren beiträgt. Außerdem entsteht im Regime des Tiefschweißens Metalldampf, der sich in der Umgebung der Laserschweißnaht niederschlagen kann. Dies ist zum einen aus ästhetischen Gründen problematisch, zum anderen kann es beim Schweißen elektrischer oder elektronischer Komponenten zu Kriechströmen oder Kurzschlüssen führen. Weiterhin erweist es sich als schwierig, Bauteile aus verschiedenen Materialien miteinander zu verschweißen. Gasdichte Schweißungen sind insbesondere bei Verwendung oxidationsempfindlicher Materialien aufgrund der Nahtversprödung kaum möglich. Besonders problematisch ist die Anwendung dieses Schweißregimes auf Sinter-Bauteile, die beispielsweise additiv oder mittels eines Metallpulver-Spritzgussverfahrens (Metal Injection Molding-Verfahren - MIM-Verfahren) hergestellt sind. Bei der Herstellung solcher Bauteile kann nicht vollständig ausgeschlossen werden, dass Restanteile eines organischen Bindermaterials vorhanden sind, welches dem Metallpulver beigemischt und für das Formen des Grünlings im Metallpulver-Spritzguss wichtig ist, die dann aufgrund der hohen Laserleistung beim Tiefschweißen ausgasen, oxidieren und Rückstände bilden, die eine ästhetische Anmutung der miteinander geschweißten Bauteile stark beeinträchtigen. Weiterhin führen die Oxidationsprodukte des Restbinders auch zu einer Versprödung der Schweißnaht, sodass keine stabile, gasdichte Verschweißung erhalten werden kann. Sinter-Bauteile weisen außerdem typischerweise in ihrem Inneren Poren auf, die gasgefüllt sein können. Auch dieses Gas kann im Regime des Laserschweißens chemisch verändert werden, insbesondere mit dem Material des Sinter-Bauteils reagieren und/oder sich auf der Oberfläche niederschlagen, was eine ästhetische und/oder mechanische Beeinträchtigung der Schweißung zur Folge haben kann. Auch die Erzeugung einer Schweißnaht mit wohldefinierter Nahttiefe ist im Regime des Tiefschweißens kaum möglich, da die Nahttiefe kaum steuerbar ist. Weiterhin können dünnwandige, insbesondere feinmechanische Bauteile kaum im Regime des Tiefschweißens miteinander verschweißt werden, da insbesondere aufgrund der kaum steuerbaren Nahttiefe ein Durchschweißen und damit eine Zerstörung der Bauteile beziehungsweise des entstehenden Bauteilverbunds droht.

Das Regime des Wärmeleitungsschweißens weist jedoch ebenfalls Nachteile auf: Dadurch, dass hiermit lediglich vergleichsweise flache Schweißnähte erzeugt werden können, deren Tiefe kaum beeinflussbar ist, kann in diesem Regime ebenfalls keine stabile Verbindung zweier Bauteile miteinander erreicht werden, die auch unter hohem Druck hält und insbesondere unter solchen Bedingungen gasdicht ist.

Es ist vorgeschlagen worden, die Nahttiefe beim Wärmeleitungsschweißen durch einen Zusatzwerkstoff, durch Anpassen der Temperatur an der Schmelzbadoberfläche und durch Beimischen von Prozessgasen zu beeinflussen, insbesondere zu erhöhen (R. Daub, "Erhöhung der Nahttiefe beim Laserstrahl-Wärmeleitungsschweißen von Stählen", Dissertation, Fakultät für Maschinenwesen, Technische Universität München, 2012). Soweit dies überhaupt praktikabel ist, kann gleichwohl mittels dieser Maßnahmen keine hinreichende Erhöhung der Nahttiefe und/oder genaue geometrische Einstellung derselben erfolgen.

Ein Verfahren zum Fügen zweier Bauteile miteinander durch Laserschweißen, wobei die Bestrahlungsfläche in dem Fügebereich einen Spalt aufweist, der wenigstens eine abgerundete Wandung aufweist, ist in der Druckschrift DE102016001270 offenbart.

Der Erfindung liegt die Aufgabe zugrunde, ein Verfahren zum Fügen zweier Bauteile miteinander durch Laserschweißen sowie eine Bauteil-Anordnung mit zwei Bauteilen zu schaffen, wobei die genannten Nachteile nicht auftreten.

Die Aufgabe wird insbesondere gelöst, indem ein Verfahren zum Fügen zweier Bauteile miteinander durch Laserschweißen gemäss Anspruch 1 geschaffen wird, wobei ein erstes Bauteil und ein zweites Bauteil derart zu einer Bauteil-Anordnung einander benachbart angeordnet werden, dass die Bauteil-Anordnung eine Bestrahlungsfläche aufweist, die eine erste Bestrahlungs-Teilfläche an dem ersten Bauteil und eine zweite Bestrahlungs-Teilfläche an dem zweiten Bauteil aufweist. Die Bestrahlungsfläche wird entlang einer Bestrahlungsrichtung in einem Fügebereich mit einem Laserstrahl bestrahlt. Die Bestrahlungsrichtung entspricht dabei insbesondere der Propagations- oder Ausbreitungsrichtung des Laserstrahls. Dabei vorgesehen, dass die Bestrahlungfläche in dem Fügebereich einen Spalt aufweist, der sich ausgehend von der Bestrahlungsfläche in Bestrahlungsrichtung verjüngt. Zugleich werden das erste Bauteil und das zweite Bauteil durch Wärmeleitungsschweißen miteinander gefügt. Indem die Bestrahlungsfläche in dem Fügebereich mit dem Spalt versehen wird, ist es möglich, die Bedingungen der Ausbildung der Laserschweißnaht auch im Regime des Wärmeleitungsschweißens so zu beeinflussen, dass die Nahtgeometrie der Laserschweißnaht einstellbar wird. Insbesondere kann die Geometrie der Laserschweißnaht im Querschnitt oder Schliffbild durch die Geometrie des Spalts weitestgehend bestimmt oder vorgegeben werden. Somit ist es insbesondere möglich, mittels des sich ausgehend von der Bestrahlungsfläche in Bestrahlungsrichtung verjüngenden Spalts auch im Regime des Wärmeleitungsschweißens sehr stabile Schweißnähte auszubilden, die insbesondere auch eine Tiefe aufweisen können, die größer ist als ihre Breite. Durch die Laserstrahlung wird nämlich - insbesondere unter Ausbildung von Mehrfachreflexionen der Laserstrahlung in dem Spalt - Material von Wandungen des Spalts abgeschmolzen, welches dann in den sich verjüngenden Spalt hineinfließt und den Spalt quasi von unten her, d.h. von der Seite des Spalts her, die der Bestrahlungsfläche abgewandt ist, auffüllt. Somit wird insbesondere die Tiefe der entstehenden Schweißnaht im Wesentlichen geometrisch durch die Ausgestaltung des sich in Bestrahlungsrichtung verjüngenden Spalts bestimmt/eingestellt. Die Einschweißtiefe kann durch die Geometrie des Spalts vorgegeben werden.

Das Verfahren eignet sich in besonderer Weise zum Verschweißen dünnwandiger Bauteile miteinander. Dies ergibt sich insbesondere daraus, dass bei dem Verfahren zum einen die Tiefe der Schweißnaht gut definiert werden kann, sodass nicht die Gefahr eines Durchschweißens besteht, wobei zum anderen eine stabile, feste und insbesondere auch druckdichte Verbindung der Bauteile miteinander geschaffen werden kann.

Die Bestrahlungsrichtung wird bevorzugt parallel zu einer Mittelebene oder Symmetrieebene des Spalts gewählt. Vorzugsweise liegt die Bestrahlungsrichtung in der Mittelebene oder Symmetrieebene. Wenn die Bestrahlungs-Teilflächen miteinander fluchten, steht die Bestrahlungsrichtung bevorzugt senkrecht auf der Bestrahlungsfläche.

Vorzugsweise sind die Wandungen des Spalts Teilflächen der Bestrahlungsfläche.

Durch die in dem Spalt auftretenden Mehrfachreflexionen kann wesentlich mehr Energie eingebracht werden, als dies bei Bestrahlung der Bestrahlungsfläche ohne den Spalt möglich wäre. Dies trägt zur Ausbildung stabilerer und/oder tieferer Schweißnähte auch im Bereich des Wärmeleitungsschweißens bei. Somit weisen die derart erzeugten Schweißnähte einerseits alle Eigenschaften und Vorteile von im Regime des Wärmeleitungsschweißens hergestellten Nähten auf, nämlich eine glatte Oberfläche, hohe Duktilität, Freiheit von Spritzern, Metalldampf und Poren, Vermeidung von Oxidbildung bei der Entstehung, und weitere mehr, wobei zugleich aber sehr stabile, gas-und druckdichte Nähte gebildet werden können, die insbesondere auch eine größere Tiefe aufweisen können, als es ihrer Breite entspricht. Es entstehen duktile, zähe Schweißverbindungen, die frei sind von Versprödungen insbesondere durch Oxide.

Dabei ist es auch möglich, verschiedene Fügepartner im Regime des Wärmeleitungsschweißens miteinander zu verschweißen. Weiter ist es möglich, dünnwandige Bauteile, insbesondere mit Wandstärken von 0,1 mm bis 4 mm, vorzugsweise von 0,2 mm bis 3 mm, miteinander oder mit dickwandigeren Bauteilen zu verschweißen, ohne dass ein Durchschweißen und damit eine Beschädigung der Bauteile zu befürchten ist.

Sinter-Bauteile, insbesondere additiv gefertigte Bauteile oder solche, die in einem Metallpulverspritzguss-Verfahren hergestellt sind, können ohne weiteres mit dem hier vorgeschlagenen Verfahren gefügt werden, da Restbinderanteile nicht oxidieren und somit weder zu einer Nahtversprödung beitragen, noch sich unschöne Ablagerungen von Oxidationsprodukten oder Restgasen aus Poren ausbilden.

Wichtig ist, dass das Laserschweißen im Rahmen des hier vorgeschlagenen Verfahrens im Regime des Wärmeleitungsschweißens erfolgt. Die Leistungsdichte beträgt dabei vorzugsweise weniger als 10⁶ W/cm², vorzugsweise weniger als 8.10⁵ W/cm², vorzugsweise weniger als 6·10⁵ W/cm², vorzugsweise weniger als 5·10⁵ W/cm², vorzugsweise weniger als 4·10⁵ W/cm², vorzugsweise weniger als 3·10⁵ W/cm², vorzugsweise weniger als 2·10⁵ W/cm², vorzugsweise weniger als 10⁵ W/cm², vorzugsweise weniger als 8·10⁴ W/cm², vorzugsweise weniger als 6·10⁴ W/cm², vorzugsweise weniger als 5·10⁴ W/cm². Insbesondere wird beim Wärmeleitungsschweißen die Leistungsdichte so gewählt, dass eine Erwärmung der Bauteil- Anordnung über die Verdampfungstemperatur desjenigen Bauteils der beiden Bauteile, welches die niedrigere Verdampfungstemperatur aufweist, oder über die Verdampfungstemperatur der beiden Bauteile hinaus, vermieden wird.

Unter einem Querschnitt wird eine Ansicht verstanden, die in einer Ebene liegt, in welcher die Bestrahlungsrichtung bestimmungsgemäß angeordnet ist, wobei sich eine Längsrichtung des Spalts und auch der gebildeten Laserschweißnaht senkrecht zu dieser Ebene erstreckt. Die Querschnittsebene ist somit insbesondere auch eine Ebene, in der üblicherweise Schliffbilder angefertigt werden, um die Qualität der Schweißung und insbesondere der Laserschweißnaht beurteilen zu können.

Bevorzugt wird im Rahmen des Verfahrens wenigstens ein dünnwandiges Bauteil als erstes Bauteil und/oder als zweites Bauteil verwendet, wobei die Wandstärke des wenigstens einen dünnwandigen Bauteils bevorzugt von wenigstens 0,1 mm bis höchstens 4 mm, vorzugsweise von wenigstens 0,2 mm bis höchstens 3 mm beträgt. Besonders bevorzugt wird sowohl als erstes Bauteil als auch als zweites Bauteil ein dünnwandiges Bauteil, insbesondere mit einer solchen Wandstärke, verwendet, sodass besonders bevorzugt wenigstens zwei dünnwandige Bauteile miteinander verschweißt werden. Das vorliegende Verfahren eignet sich ganz besonders für Schweißungen im Bereich der Feinmechanik, insbesondere zum Verschweißen feinmechanischer Bauteile miteinander.

Wenigstens ein Bauteil, ausgewählt aus dem ersten Bauteil und dem zweiten Bauteil, ist vorzugsweise als Blech ausgebildet. Alternativ oder zusätzlich ist wenigstens ein Bauteil, ausgewählt aus dem ersten Bauteil und dem zweiten Bauteil, vorzugsweise als Draht ausgebildet. Alternativ oder zusätzlich ist wenigstens ein Bauteil, ausgewählt aus dem ersten Bauteil und dem zweiten Bauteil, vorzugsweise als rotationssymmetrisches Bauteil, insbesondere als Welle, Achse, Rohr, oder dergleichen ausgebildet. Mit dem hier vorgeschlagenen Verfahren ist es möglich, als Bleche ausgebildete Bauteile miteinander zu fügen, es können aber auch als Drähte ausgebildete Bauteile miteinander gefügt werden. Auch kann ein als Blech ausgebildetes Bauteil mit einem als Draht ausgebildeten Bauteil gefügt werden. Drähte untereinander - oder auch ein Draht in Berührung mit einem Blech - bilden aufgrund ihrer runden Geometrie eine Linienberührung mit dem benachbarten Bauteil aus, die quasi den Spaltgrund des Spaltes bildet, den dann die Bestrahlungsfläche aufweist. Insbesondere weisen auf diese Weise zwei entlang ihrer Längserstreckung nebeneinander angeordnete Drähte, die insbesondere aneinander anliegen, und die senkrecht zu ihrer Längserstreckung mit Laserstrahlung bestrahlt werden, aufgrund ihrer runden Geometrie einen Spalt auf, der sich ausgehend von der Bestrahlungsfläche in Bestrahlungsrichtung verjüngt. Dabei hat sich gerade beim Schweißen solcher Drähte - oder auch einer Anordnung aus einem Draht und einem Blech - mittels des hier vorgeschlagenen Verfahrens herausgestellt, dass das von den Wandungen des Spalts abgeschmolzene Material sehr effizient den Spalt füllt, jedoch nicht auf der der Bestrahlungsfläche abgewandten Seite des Spalts aus diesem austritt. Somit wird selbst eine derart fragile Anordnung nicht durchgeschweißt, sondern es wird vielmehr eine saubere, stabile Schweißnaht erzeugt, wobei die miteinander verbundenen Bauteile auch von einer der Schweißnaht abgewandten Seite her eine ästhetisch günstige Anmutung aufweisen, da hier kein Schweißmaterial austritt und insbesondere keine Spritzer hin gelangen. Insbesondere kann eine optische Qualität wie bei einer Lötnaht erreicht werden. Rotationssymmetrisch ausgebildete Bauteile können mit dem hier vorgeschlagenen Verfahren insbesondere entlang einer Umfangslinie - insbesondere ringsum entlang des gesamten Umfangs - verschweißt werden. Es ist bevorzugt möglich, dass beide Bauteile als rotationssymmetrische Bauteile ausgebildet sind.

Die Bestrahlungsfläche kann bereichsweise eben ausgebildet sein. Erfindungsgemäß sind die erste Bestrahlungs-Teilfläche und die zweite Bestrahlungs-Teilfläche in dem Fügebereich durch den Spalt voneinander getrennt.

Es ist möglich, dass zwischen dem ersten Bauteil und dem zweiten Bauteil ein Abstand bleibt, wobei insbesondere geringe Abstände von höchstens 0,3 mm beim Laserschweißen mit dem hier vorgeschlagenen Verfahren überbrückt werden können. Insbesondere Abstände zwischen dem ersten Bauteil und dem zweiten Bauteil in der genannten Größenordnung können durch das hier vorgeschlagene Verfahren überbrückt werden, da das von den Wandungen des Spalts abgeschmolzene Material Tropfen bildet, die in den sich verjüngenden Spalt hineinfließen und diesen von unten her verschließen. Dabei erstarrt das aufgeschmolzene Material, bevor es auf der gegenüberliegenden Seite aus dem Spalt wieder austreten kann. Der hier angesprochene Abstand ist insbesondere ein kleinster Abstand zwischen dem ersten Bauteil und dem zweiten Bauteil, der insbesondere in dem Grund des Spalts gegeben sein kann.

In Rahmen des hier vorgeschlagenen Verfahrens wird demnach insbesondere ein Durchschweißen des Spalts oder durch den Spalt gezielt vermieden.

Gemäß der Erfindung ist vorgesehen, dass die Bauteilanordnung bereitgestellt wird, indem das erste Bauteil und das zweite Bauteil in einem Abstand zueinander angeordnet werden, der von mindestens 0,01 mm bis höchstens 0,3 mm, vorzugsweise bis höchstens 0,25 mm, vorzugsweise bis höchstens 0,2 mm, vorzugsweise mindestens 0,02 mm, vorzugsweise mindestens 0,05 mm, vorzugsweise bis höchstens 0,1 mm, beträgt. Dieser Abstand wird insbesondere in dem Fügebereich gemessen. Es ist aber auch möglich, dass die Bauteile nicht entlang einer gesamten Erstreckung des Fügebereichs in einem selben Abstand zueinander angeordnet werden können, sei es aufgrund nicht vollständig paralleler Oberflächen oder aufgrund von einer Bauteilkrümmung in wenigstens einer Richtung. In diesem Fall können sich entlang des Fügebereichs - insbesondere entlang der Erstreckung der auszubildenden Schweißnaht - verschiedene Abstände ergeben, die insbesondere in den hier genannten Bereichen liegen können, wobei der Abstand insbesondere in den genannten Bereichen variieren kann. Wie bereits hervorgehoben, können solche Abstände ohne weiteres beim Laserschweißen mit dem hier vorgeschlagenen Verfahren überbrückt werden.

Gemäß der Erfindung werden die Bauteile dabei ohne einen Zusatzwerkstoff miteinander gefügt, es wird also kein Zusatzwerkstoff beim Laserschweißen verwendet, wobei ein Abstand in der genannten Größenordnung beim Laserschweißen im Rahmen des hier vorgeschlagenen Verfahrens ohne weiteres auf der Grundlage des zuvor erläuterten Mechanismus ohne Zusatzwerkstoff überbrückt werden kann.

Gemäß der Erfindung ist vorgesehen, dass ein minimaler Abstand zwischen dem ersten Bauteil und dem zweiten Bauteil zu mindestens 0,01 mm bis höchstens 0,3 mm, vorzugsweise bis höchstens 0,25 mm, vorzugsweise bis höchstens 0,2 mm, vorzugsweise mindestens 0,02 mm, vorzugsweise mindestens 0,05 mm, vorzugsweise höchstens 0,1 mm, gewählt wird. Der minimale Abstand wird dabei bevorzugt in dem Fügebereich gemessen. Der minimale Abstand stellt insbesondere einen kürzesten oder kleinsten Abstand zwischen dem ersten Bauteil und dem zweiten Bauteil - insbesondere in dem Fügebereich - dar. Der minimale Abstand wird demnach bevorzugt gezielt eingestellt. Wie bereits ausgeführt, können Abstände in den hier genannten Größenordnungen oder Bereichen ohne weiteres im Rahmen des hier vorgeschlagenen Verfahrens durch Laserschweißen überbrückt werden. Besonders bevorzugt wird dabei kein Zusatzwerkstoff angewendet, das erste Bauteil und das zweite Bauteil werden also insbesondere ohne einen Zusatzwerkstoff miteinander gefügt.

Die Begriffe "Spalt" und "Abstand" werden hier insbesondere folgendermaßen verwendet: Der Spalt ist in dem Fügebereich ausgebildet und verjüngt sich ausgehend von der Bestrahlungsfläche, sodass eine im Bereich des Spalts gemessene Distanz zwischen dem ersten Bauteil und dem zweiten Bauteil sich ausgehend von der Bestrahlungsfläche in Bestrahlungsrichtung gesehen verringert. Der Abstand ist nun diejenige Distanz zwischen den Bauteilen, die in Bestrahlungsrichtung im Bereich des Spalts minimal ist, insbesondere die Distanz am Ende oder Fuß des Spalts, oder eine Distanz, die in Bestrahlungsrichtung unterhalb des Spalts, also der Bestrahlungsfläche abgewandt, gemessen wird. Der Begriff "Spalt" bezeichnet also eine bestimmte geometrische Struktur der Bauteil-Anordnung, während der Begriff "Abstand" eine bestimmte Distanz zwischen dem ersten Bauteil und dem zweiten Bauteil bezeichnet, die insbesondere - in Bestrahlungsrichtung gesehen - auf einer bestimmten Höhe gemessen wird, vorzugsweise am Fuß des Spalts oder der Bestrahlungsfläche abgewandt unterhalb des Spalts.

Gemäß der Erfindung werden die Bauteile miteinander ohne Verwendung eines Zusatzwerkstoffs gefügt. Bei dem hier vorgeschlagenen Verfahren kann in vorteilhafter Weise auf die Verwendung eines Zusatzwerkstoffs verzichtet werden. Dies ist insbesondere günstig beim Schweißen feinmechanischer Bauteile, insbesondere wenn diese Stärken oder Dicken im Bereich von wenigen Zehntel Millimeter, insbesondere von 0,1 mm bis 4 mm, vorzugsweise von 0,2 mm bis 3 mm, aufweisen.

Alternativ oder zusätzlich ist vorgesehen, dass das erste Bauteil und das zweite Bauteil ohne Schutzgas miteinander gefügt werden. Mit dem hier offenbarten Verfahren ist es vorteilhaft möglich, ohne Verwendung eines Schutzgases oxidfreie, duktile, zähe, stabile und insbesondere druckdichte Schweißnähte zu erzeugen.

Gemäß der Erfindung ist vorgesehen, dass ein Quotient eines Strahl-Breitenmaßes des Laserstrahls zu einer in der Bestrahlungsfläche gemessenen Breite des Spalts von mindestens 0,2 bis höchstens 2,0 beträgt. Es hat sich herausgestellt, dass in diesem Bereich des Quotienten besonders günstige Ergebnisse mit Blick auf eine stabile Schweißnaht erhalten werden. Weist der Laserstrahl ein gaußförmiges Strahlprofil auf, wird das Strahl-Breitenmaß vorzugsweise in einer Ebene senkrecht zur Bestrahlungsrichtung dort gemessen, wo die Intensität des Laserstrahls noch einen Faktor 1/e² der Intensität des Laserstrahls auf der Strahlmittelachse, also im Intensitätsmaximum des Gaußprofils, beträgt. Weist der Laserstrahl ein Rechteckprofil auf, ist das Strahl-Breitenmaß ohne weiteres durch das Rechteckprofil definiert. Es ist auch möglich, dass der Laserstrahl durch geeignete Strahlblenden oder Strahlformung geformt oder ausgeblendet ist. Auch in diesem Fall weist der Laserstrahl ein dann insbesondere durch den Blendendurchmesser bestimmtes Strahl-Breitenmaß auf.

Unter einem Strahl-Breitenmaß wird hier insbesondere eine senkrecht zu einer Vorschubrichtung entlang einer Längserstreckung der entstehenden Schweißnaht gemessene Strahlbreite im Querschnitt des Laserstrahls bezeichnet. Bei einem kreisförmigen Strahlquerschnitt ist das Strahl-Breitenmaß insbesondere ein Strahl-Durchmesser. Der Einfachheit wegen werden im Folgenden die Begriffe "Strahl-Breitenmaß" und "Strahl-Durchmesser" synonym zueinander verwendet, ohne Rücksicht auf die konkrete Form oder das konkrete Profil des Laserstrahls im Querschnitt.

Gemäß einer Weiterbildung der Erfindung ist vorgesehen, dass der Quotient des Strahl-Breitenmaßes zu der Breite des Spalts von mindestens 0,3 bis höchstens 2,0; vorzugsweise von mindestens 0,4 bis höchstens 2,0; vorzugsweise von mindestens 0,5 bis höchstens 2,0; vorzugsweise von mindestens 0,6 bis höchstens 1,9; vorzugsweise von mindestens 0,7 bis höchstens 1,8; vorzugsweise bis höchstens 1,7; vorzugsweise bis höchstens 1,6; vorzugsweise von mindestens 0,8 bis höchstens 1,5; vorzugsweise von mindestens 0,9 bis höchstens 1,4; vorzugsweise von mindestens 1,0 bis höchstens 1,3; vorzugsweise 1,2, beträgt. Es hat sich herausgestellt, dass in den ich hier definierten Bereichen besonders günstige Bedingungen zur Ausbildung einer stabilen Laserschweißnaht im Rahmen des hier vorgeschlagenen Verfahrens gegeben sind.

Gemäß einer Weiterbildung der Erfindung ist vorgesehen, dass der Spalt symmetrisch an dem ersten Bauteil und an dem zweiten Bauteil vorgesehen ist. In diesem Fall weist vorzugsweise die Bauteil-Anordnung aus dem ersten Bauteil und dem zweiten Bauteil eine sich zwischen den Bauteilen erstreckende Symmetrieebene auf, wobei die gesamte Spaltgeometrie durch Spiegelung der Geometrie des ersten Bauteils im Bereich des Spalts an der Symmetrieebene - oder umgekehrt durch Spiegelung der Geometrie des zweiten Bauteils an der Symmetrieebene - erhalten wird.

Alternativ ist es möglich, dass der Spalt asymmetrisch an dem ersten Bauteil und an dem zweiten Bauteil vorgesehen ist, wobei sich die Wandungen des Spalts an den Bauteilen insbesondere in Hinblick auf ihre Krümmung unterscheiden können.

Alternativ ist es möglich, dass der Spalt einseitig an einem Bauteil, ausgewählt aus dem ersten Bauteil und dem zweiten Bauteil, ausgebildet ist. Es ist also möglich, dass eines der Bauteile keine Abrundung aufweist, sondern beispielsweise - im Querschnitt gesehen - rechteckförmig oder rechtwinklig ausgebildet ist. Das andere Bauteil weist dann eine Abrundung auf, sodass der Spalt in dem Fügebereich ausgebildet wird.

Durch die bestimmte Wahl einer Geometrie für den Spalt kann die Geometrie der entstehenden Laserschweißnaht bestimmt werden, wodurch bevorzugt auch deren Eigenschaften mitbestimmt werden.

Gemäß der Erfindung ist vorgesehen, dass der Spalt wenigstens eine abgerundete Wandung aufweist. Ein Beispiel für eine solche abgerundete Wandung ergibt sich bei einem Draht, der von sich aus eine runde Geometrie - im Querschnitt gesehen - aufweist. Zwei aneinandergelegte Drähte oder ein an ein Blech gelegter Draht weisen somit aufgrund ihrer eigenen Geometrie einen Spalt mit abgerundeter Wandung auf. Besonders bevorzugt weist der Spalt zwei abgerundete Wandungen auf. Dies ist beispielsweise der Fall bei zwei entlang ihrer Längsrichtung nebeneinander angeordneten Drähten, bei zwei nebeneinander angeordneten Blechen mit abgerundeten Kanten, oder auch bei einem Blech mit abgerundeter Kante, neben dem ein Draht angeordnet wird.

Zusätzlich ist es möglich, dass der Spalt wenigstens eine ebene Schrägwandung aufweist. Dies ist beispielsweise möglich, wenn eines der Bauteile in dem Fügebereich eine Fase oder eine andere Abschrägung aufweist.

Auch insoweit trägt die spezifische Auswahl einer Geometrie für den Spalt wesentlich zu den Eigenschaften der gebildeten Laserschweißnaht, insbesondere zu deren geometrischen Ausgestaltung, bei.

Bevorzugt wird wenigstens ein Blech mit abgerundeter Kante als das wenigstens eine erste und/oder zweite Bauteil verwendet.

Gemäß einer Weiterbildung der Erfindung vorgesehen, dass die wenigstens eine abgerundete Wandung einen Radius von mindestens 0,1 mm bis höchstens 5 mm; vorzugsweise von mindestens 0,3 mm bis höchstens 5 mm; vorzugsweise bis höchstens 4,5 mm, vorzugsweise bis höchstens 4 mm; vorzugsweise bis höchstens 3,5 mm; vorzugsweise bis höchstens 3 mm; vorzugsweise bis höchstens 2,7 mm; vorzugsweise von mindestens 0,4 mm bis höchstens 2,6 mm; vorzugsweise von mindestens 0,5 mm bis höchstens 2,5 mm; vorzugsweise von mindestens 0,6 mm bis höchstens 2,4 mm; vorzugsweise von mindestens 0,7 mm bis höchstens 2,3 mm; vorzugsweise von mindestens 0,8 mm bis höchstens 2,2 mm; vorzugsweise von mindestens 0,9 mm bis höchstens 2,1 mm; vorzugsweise von mindestens 1,0 mm bis höchstens 2,0 mm; vorzugsweise von mindestens 1,1 mm bis höchstens 1,9 mm; vorzugsweise von mindestens 1,2 mm bis höchstens 1,8 mm; vorzugsweise von mindestens 1,3 mm bis höchstens 1,7 mm; vorzugsweise von mindestens 1,4 mm bis höchstens 1,6 mm; vorzugsweise 1,5 mm, vorzugsweise 0,65 mm aufweist. Es hat sich herausgestellt, dass bei den hier definierten Radien für die wenigstens eine abgerundete Wandung, vorzugsweise für die beiden abgerundeten Wandungen des Spalts, besonders günstige Bedingungen für die Ausbildung einer stabilen Laserschweißnaht im Regime des Wärmeleitungsnahtschweißens herrschen, wobei zugleich Schweißnähte gebildet werden können, die bevorzugt eine Tiefe aufweisen, die größer ist als ihre in der Bestrahlungsfläche gemessene Breite.

Alternativ oder zusätzlich ist bevorzugt vorgesehen, dass ein Quotient aus einer in Bestrahlungsrichtung von der Bestrahlungsfläche ausgehend gemessenen Tiefe des Spalts dividiert durch die in der Bestrahlungsfläche gemessenen Breite des Spalts von mindestens 0,2, vorzugsweise von mindestens 0,3, vorzugsweise von mindestens 0,5, vorzugsweise von mindestens 0,6 bis höchstens 3,2; vorzugsweise von mindestens 0,7 bis höchstens 3,1; vorzugsweise von mindestens 0,8 bis höchstens 3,0; vorzugsweise von mindestens 0,9 bis höchstens 2,9; vorzugsweise von mindestens 1,0 bis höchstens 2,8; vorzugsweise von mindestens 1,2 bis höchstens 2,6; vorzugsweise von mindestens 1,4 bis höchstens 2,4; vorzugsweise von mindestens 1,6 bis höchstens 2,2; vorzugsweise von mindestens 1,8 bis höchstens 2,0; vorzugsweise 1,9 beträgt. Es hat sich herausgestellt, dass insbesondere die hier angegebenen Bereiche für den Quotienten der Tiefe des Spalts zu seiner in der Bestrahlungsfläche gemessenen Breite die Ausbildung einer stabilen Laserschweißnaht im Regime des Wärmeleitungsschweißens ermöglichen.

Gemäß einer Weiterbildung der Erfindung ist vorgesehen, dass der Laserstrahl in einem CW-Betrieb oder Dauerstrich-Betrieb erzeugt wird (CW - Continuous Wave). Der Laserstrahl wird also als kontinuierliche Laserstrahlung erzeugt. Mit einem kontinuierlichen Laserstrahl können besonders glatte und homogene Laserschweißnähte erzeugt werden.

Alternativ ist es möglich, dass Laserstrahl in einem Pulsbetrieb, d.h. als gepulste Laserstrahlung erzeugt wird. Auf diese Weise können besonders gut höhere Leistungsdichten erzeugt werden.

Es ist bevorzugt vorgesehen, dass die Bestrahlungsfläche durch den Laserstrahl in einem getakteten Betrieb bestrahlt wird. Dabei kann ein getakteter Betrieb entweder dadurch verwirklicht werden, dass ein kontinuierlicher, im CW-Betrieb erzeugter Laserstrahl durch eine Taktungseinrichtung, beispielsweise einen Shutter, zeitlich zerhackt und damit getaktet wird, oder dass ein gepulster Laserstrahl verwendet wird. Selbstverständlich ist es auch möglich, einen im Pulsbetrieb erzeugten, gepulsten Laserstrahl zusätzlich durch eine Taktungseinrichtung, beispielsweise einen Shutter, zeitlich zu takten, beispielsweise um eine Taktfrequenz des getakteten Betriebs zu beeinflussen. Im getakteten Betrieb können besonders ästhetische Schweißnähte erzeugt werden.

In dem getakteten Betrieb wird bevorzugt eine Pulslänge von mindestens 1 ms bis höchstens 5 ms, vorzugsweise bis höchstens 3 ms, für einen Takt oder ein einzelnes Bestrahlungsereignis der Bestrahlungsfläche erzeugt.

Alternativ ist bevorzugt vorgesehen, dass die Bestrahlungsfläche in einem kontinuierlichen Betrieb mit dem Laserstrahl bestrahlt wird. Hierzu wird bevorzugt ein im CW-Betrieb erzeugter, kontinuierlicher Laserstrahl verwendet, der nicht mittels einer Taktungseinrichtung zeitlich getaktet wird.

Alternativ oder zusätzlich ist bevorzugt vorgesehen, dass der Laserstrahl mit einem Strahl-Durchmesser von mindestens 0,1 mm bis höchstens 2,5 mm; vorzugsweise bis höchstens 2 mm; vorzugsweise bis höchstens 1,5 mm; vorzugsweise bis höchstens 1 mm; vorzugsweise bis höchstens 0,9 mm; vorzugsweise von mindestens 0,2 mm bis höchstens 0,8 mm; vorzugsweise von mindestens 0,3 mm bis höchstens 0,7 mm; vorzugsweise von mindestens 0,4 mm bis höchstens 0,6 mm; vorzugsweise von 0,5 mm oder 0,4 mm erzeugt wird. Es hat sich herausgestellt, dass in den hier angegebenen Bereichen für den Strahl-Durchmesser besonders stabile Laser-Schweißnähte im Rahmen des hier vorgeschlagenen Verfahrens erzeugt werden können.

Alternativ oder zusätzlich wird bevorzugt vorgesehen, dass der Laserstrahl mit einer - insbesondere zeitlich gemittelten - Leistung von mindestens 50 W bis höchstens 5 kW; vorzugsweise von mindestens 100 W bis höchstens 5 kW; vorzugsweise bis höchstens 4,5 kW; vorzugsweise bis höchstens 4 kW; vorzugsweise bis höchstens 3,5 kW; vorzugsweise bis höchstens 3 kW; vorzugsweise bis höchstens 2,5 kW; vorzugsweise von mindestens 250 W bis höchstens 2 kW, vorzugsweise von 750 W erzeugt wird. Dabei wird insbesondere die Leistung so auf den Strahl-Durchmesser abgestimmt, dass die Leistungsdichte im Regime des Wärmeleitungsschweißens liegt.

Alternativ oder zusätzlich ist bevorzugt vorgesehen, dass der Laserstrahl mit einer Wellenlänge von mindestens 400 nm bis höchstens 1200 nm, vorzugsweise von mindestens 920 nm bis höchstens 1064 nm, insbesondere 532 nm oder 515 nm oder 450 nm, erzeugt wird. Dieser Wellenlängenbereich eignet sich in besonders günstiger Weise zum Wärmeleitungsschweißen, insbesondere von MIM-Bauteilen. Die Wellenlänge des Laserstrahls wird vorzugsweise auf die Absorption des für die Bauteile verwendeten Materials oder die Absorption der Materialien der Bauteile abgestimmt.

Alternativ oder zusätzlich ist bevorzugt vorgesehen, dass der Laserstrahl mit einer Vorschubgeschwindigkeit von mindestens 0,25 m/min, vorzugsweise von mindestens 0,5 m/min bis höchstens 30 m/min, vorzugsweise von mindestens 1 m/min bis höchstens 25 m/min, vorzugsweisen von mindestens 2 m/min bis höchstens 20 m/min, vorzugsweise von mindestens 3 m/min bis höchstens 17 m/min; vorzugsweise von mindestens 4 m/min bis höchstens 16 m/min; vorzugsweise von mindestens 5 m/min bis höchstens 15 m/min; vorzugsweise von mindestens 6 m/min bis höchstens 14 m/min; vorzugsweise von mindestens 7 m/min bis höchstens 13 m/min; vorzugsweise von mindestens 8 m/min bis höchstens 12 m/min; vorzugsweise von mindestens 9 m/min bis höchstens 11 m/min; vorzugsweise von 10 m/min oder von 12 m/min entlang des Spalts relativ zu der Bauteil-Anordnung verlagert wird. Die hier genannten Vorschubgeschwindigkeiten gewährleisten die stabile Ausbildung einer Laserschweißnaht im Rahmen des hier vorgeschlagenen Verfahrens. Besonders bevorzugt wird der Laserstrahl in dem getakteten Betreib mit einer Vorschubgeschwindigkeit von mindestens 0,25 m/min, vorzugsweise von mindestens 0,5 m/min bis höchstens 3 m/min, vorzugsweise bis höchstens 1 m/min, entlang des Spalts relativ zu der Bauteilanordnung verlagert. Alternativ oder zusätzlich wird der Laserstrahl bevorzugt in dem kontinuierlichen Betrieb mit einer Vorschubgeschwindigkeit von mindestens 3 m/min bis höchstens 30 m/min entlang des Spalts relativ zu der Bauteilanordnung verlagert. Auf diese Weise kann die Vorschubgeschwindigkeit vorteilhaft auf den Betriebsmodus der Bestrahlung der Bestrahlungsfläche abgestimmt werden.

Gemäß einer Weiterbildung der Erfindung ist vorgesehen, dass der Laserstrahl mittels eines Lasers erzeugt wird, der ausgewählt ist aus einer Gruppe bestehend aus einem Diodenlaser, einem Faserlaser, einem Nd:YAG-Laser, insbesondere einem blitzlampengepumpten Nd:YAG-Laser, und einem Scheibenlaser, insbesondere einem diodengepumpten Scheibenlaser. Die hier vorgeschlagenen Lasertypen haben sich als besonders geeignet erwiesen, um stabile Laserschweißnähte im Rahmen des hier vorgeschlagenen Verfahrens zu erzeugen.

Gemäß einer Weiterbildung der Erfindung ist vorgesehen, dass wenigstens ein Bauteil, ausgewählt aus dem ersten Bauteil und dem zweiten Bauteil, wenigstens ein Material aufweist oder aus einem Material besteht, das ausgewählt ist aus einer Gruppe bestehend aus Neusilber, INOX, insbesondere INOX 316L, Kupfer oder einer Kupferlegierung, und Titan. Insbesondere solche Bauteile lassen sich im Rahmen des hier vorgeschlagenen Verfahrens schweißen, ohne dass dabei die Schweißnaht versprödende Oxidationsprodukte auftreten. Dabei eignet sich das hier vorgeschlagene Verfahren in besonderer Weise für diese Materialien. Gemäß einer bevorzugten Ausgestaltung ist vorgesehen, dass das erste Bauteil und das zweite Bauteil jeweils ein Material aufweisen oder aus einem Material bestehen, dass aus der zuvor genannten Gruppe ausgewählt ist.

Besondere Vorteile ergeben sich bei der Anwendung des hier offenbarten Verfahrens auf ein Material, welches Kupfer oder eine Kupferlegierung aufweist oder Kupfer oder eine Kupferlegierung ist. Insbesondere ergeben sich besondere Vorteile, wenn eine Wellenlänge für den Laserstrahl von 532 nm, 515 nm oder 450 nm, allgemein eine grüne oder blaue Wellenlänge, gewählt wird. Besonders vorteilhaft beim Schweißen von Kupfer und Kupferlegierungen sind die sich im Rahmen des Verfahrens ergebenden Mehrfachreflexionen in dem Spalt. Dabei wird die Möglichkeit des Wärmeleitungsschweißens insbesondere zu größeren Nahttiefen erweitert. Weiterhin ist das hier offenbarte Verfahren insbesondere für dünne Wandstärken geeignet.

Gemäß einer bevorzugten Ausgestaltung des Verfahrens wird ein als MIM-Bauteil hergestelltes Federscharniergehäuse einer Brille auf einen Brillenbügel geschweißt, der INOX, insbesondere INOX 316L, aufweist oder aus INOX, insbesondere INOX 316L, besteht. Insbesondere hierbei kann eine Schweißnaht erhalten werden, die die optische Anmutung und/oder Qualität einer Lötnaht aufweist.

Alternativ oder zusätzlich ist bevorzugt vorgesehen, dass wenigstens ein Bauteil, ausgewählt aus dem ersten Bauteil und dem zweiten Bauteil, als Sinter-Bauteil hergestellt ist. Bei dem hier offenbarten Verfahren wirken sich insbesondere in Poren des Sinter-Bauteils angeordnete Restgasmengen nicht nachteilig auf die Qualität der erzeugten Schweißnaht oder allgemein die Schweißung aus.

Unter einem Sinter-Bauteil wird hier insbesondere allgemein ein Bauteil verstanden, welches durch Sintern hergestellt ist, wobei insbesondere wenigstens ein Verfahrensschritt bei der Herstellung des Bauteils Sintern oder ein Sinterschritt ist.

Insbesondere ist bevorzugt vorgesehen, dass wenigstens ein Bauteil, ausgewählt aus dem ersten Bauteil und dem zweiten Bauteil, als additiv gefertigtes Sinter-Bauteil, beispielsweise durch Lasersintern, hergestellt ist.

Alternativ oder zusätzlich ist bevorzugt vorgesehen, dass wenigstens ein Bauteil, ausgewählt aus dem ersten Bauteil und dem zweiten Bauteil, als MIM-Bauteil hergestellt ist, also durch ein Metallpulverspritzgussverfahren (Metal Injection Molding - MIM). Dabei verwirklichen sich in besonderer Weise die Vorteile des Verfahrens, da solche Bauteile mit dem hier vorgeschlagenen Verfahren ohne das Risiko einer Oxidation von Restbinderanteilen und den sich daraus ergebenden negativen Konsequenzen geschweißt werden können.

Gemäß einer bevorzugten Ausgestaltung ist vorgesehen, dass beide Bauteile, also das erste Bauteil und das zweite Bauteil, als Sinter-Bauteile, insbesondere als additiv gefertigte Sinter-Bauteile oder als MIM-Bauteile hergestellt sind. Auch ist es selbstverständlich bevorzugt möglich, dass eines der Bauteile als additiv gefertigtes Sinter-Bauteil und das andere Bauteil der Bauteile als MIM-Bauteil hergestellt ist.

Gemäß einer Weiterbildung der Erfindung ist vorgesehen, dass eine Laserschweißnaht erzeugt wird, wobei eine in der Bestrahlungsfläche senkrecht zur Längserstreckung der Laserschweißnaht gemessene Breite der Laserschweißnaht von mindestens 0,1 mm bis höchstens 3 mm; vorzugsweise bis höchstens 2,5 mm; vorzugsweise bis höchstens 2 mm; vorzugsweise bis höchstens 1,5 mm; vorzugsweise bis höchstens 1 mm; vorzugsweise bis höchstens 0,9 mm; vorzugsweise von mindestens 0,2 mm bis höchstens 0,8 mm; vorzugsweise von mindestens 0,3 mm bis höchstens 0,7 mm; vorzugsweise von mindestens 0,4 mm bis höchstens 0,6 mm; vorzugsweise 0,5 mm oder 0,4 mm beträgt. Die Laserschweißnaht wird bevorzugt als langgestreckte, durchgezogene oder durch überlappende, abgesetzte Pulse erzeugte Schweißnaht entlang einer Kurve, insbesondere einer Geraden, erzeugt, sodass sie eine Längserstreckung aufweist. Die Breite der Laserschweißnaht wird dabei senkrecht zu der Längserstreckung gemessen. Mit den hier gemessenen Breiten können stabile und auch unter Druck gasdichte Schweißnähte gebildet werden.

Gemäß der Erfindung ist vorgesehen, dass eine in Bestrahlungsrichtung gemessene Tiefe der Laserschweißnaht größer ist als die in der Bestrahlungsfläche senkrecht zur Längserstreckung der Laserschweißnaht gemessene Breite der Laserschweißnaht. Auf diese Weise wird - wie bereits erläutert - eine besonders stabile Laserschweißnaht mit dem geometrischen Charakteristikum einer tiefgeschweißten Schweißnaht, jedoch im Regime des Wärmeleitungsschweißens, erzeugt.

Besonders bevorzugt wird die Laserschweißnaht mit einem Verhältnis der in Bestrahlungsrichtung gemessenen Tiefe zu der in der Bestrahlungsfläche senkrecht zur Längserstreckung der Laserschweißnaht gemessenen Breite (Aspektverhältnis) von mindestens 1 bis höchstens 3 erzeugt.

Es ist aber ebenso möglich, gezielt eine Laserschweißnaht zu erzeugen, bei der das Verhältnis der in Bestrahlungsrichtung gemessenen Tiefe zu der in der Bestrahlungsfläche senkrecht zur Längserstreckung der Laserschweißnaht gemessenen Breite, mithin das Aspektverhältnis, von mindestens 0,15 bis höchstens 0,5, vorzugsweise von mindestens 0,2 bis höchstens 0,3 beträgt. Mit dem hier offenbarten Verfahren können auch solche Laserschweißnähte sehr stabil, insbesondere duktil und zäh, mit hoher Festigkeit sowie gasdicht erzeugt werden.

Gemäß einer Weiterbildung der Erfindung ist vorgesehen, dass der Laserstrahl mehrfach - insbesondere zeitlich nacheinander - entlang des Spalts relativ zu der Bauteil-Anordnung verlagert wird. Auf diese Weise ist es möglich, die Laserschweißnaht mehrlagig zu erzeugen. Insbesondere wird die Laserschweißnaht in mehreren Durchgängen, bzw. bei rotationssymmetrischen Teilen, insbesondere Achsen, Wellen oder Rohren, mit mehreren Umdrehungen, ausgeführt. Auf diese Weise können insbesondere Laserschweißnähte erzeugt werden, deren in Bestrahlungsrichtung gemessene Tiefe wesentlich größer ist als die in der Bestrahlungsfläche senkrecht zur Längserstreckung der Laserschweißnaht gemessene Breite, wobei ein Verhältnis dieser Tiefe zu der Breite, das auch als Aspektverhältnis bezeichnet wird, bevorzugt größer ist als 2. Ein solch großes Aspektverhältnis ist sonst in bekannter Weise lediglich durch Tiefschweißen darstellbar, wobei es mittels des hier vorgeschlagenen Verfahrens auch im Regime des Wärmeleitungsschweißens erreicht werden kann.

Alternativ ist es auch möglich, dass die Laserschweißnaht in einem Durchgang erzeugt wird, wobei der Laserstrahl einmalig entlang des Spalts relativ zu der Bauteilanordnung verlagert wird.

Gemäß einer Weiterbildung der Erfindung ist vorgesehen, dass der Laserstrahl mehrfach zeitlich nacheinander entlang des Spalts relativ zu der Bauteil-Anordnung verlagert wird, wobei der Laserstrahl von mindestens zweimal bis höchstens fünfmal, vorzugsweise von mindestens zweimal bis höchstens viermal, vorzugsweise von mindestens zweimal bis höchstens dreimal, insbesondere entlang einer selben Verlagerungsstrecke, entlang des Spalts relativ zu der BauteilAnordnung verlagert wird. Die Schweißung wird somit unterteilt in mehrere Teil-Schweißungen, was ein besonders gutes Schweißergebnis und insbesondere ein besonders großes Aspektverhältnis für die Laserschweißnaht ermöglicht.

Gemäß einer Weiterbildung der Erfindung ist vorgesehen, dass eine Einwirkfläche des Laserstrahls, in welcher der Laserstrahl mit den Bauteilen in Wechselwirkung tritt, bei wenigstens zwei Verlagerungen des Laserstrahls entlang des Spalts - entlang einer selben Verlagerungsstrecke - verschieden ist. Der Laserstrahl wird somit also mehrfach entlang des Spalts relativ zu der Bauteil-Anordnung verlagert, wobei die Einwirkfläche zumindest bei einer ersten Verlagerung entlang des Spalts verschieden ist von der Einwirkfläche bei wenigstens einer zweiten Verlagerung. Insbesondere ist es möglich, dass die Einwirkfläche für alle Verlagerungen einer Mehrzahl solcher Verlagerungen des Laserstrahls entlang des Spalts verschieden gewählt wird. Insbesondere wird die Größe der Einwirkfläche, vorzugsweise ein Breitenmaß, insbesondere ein Durchmesser der Einwirkfläche, variiert.

Besonders bevorzugt nimmt die Größe der Einwirkfläche, insbesondere das Breitenmaß oder der Durchmesser der Einwirkfläche, von einer ersten Verlagerung zu einer nächsten Verlagerung des Laserstrahls, insbesondere sukzessive von jeder vorhergehenden Verlagerung zu jeder nachfolgenden Verlagerung, zu. Besonders bevorzugt ist die Zunahme der Größe der Einwirkfläche linear.

Vorzugsweise ist das Breitenmaß, insbesondere der Durchmesser, der Einwirkfläche bei einer ersten Verlagerung des Laserstrahls einer Mehrzahl von Verlagerungen kleiner als die Breite des Spalts, vorzugsweise beträgt ein Quotient des Breitenmaßes, insbesondere des Durchmessers, der Einwirkfläche zu der Spaltbreite von mindestens 0,3 bis höchstens 0,9. Vorzugsweise ist das Breitenmaß, insbesondere der Durchmesser, der Einwirkfläche für wenigstens zwei Verlagerungen einer Mehrzahl von Verlagerungen des Laserstrahls entlang des Spalts kleiner als die Spaltbreite, wobei der Quotient des Breitenmaßes zu der Breite des Spalts von mindestens 0,3 bis höchstens 0,9 beträgt. Vorzugsweise ist das Breitenmaß der Einwirkfläche, insbesondere deren Durchmesser, bei einer letzten Verlagerung einer Mehrzahl von Verlagerungen des Laserstrahls entlang des Spalts, insbesondere nur bei der letzten Verlagerung, größer als oder gleich groß wie die Breite des Spalts, wobei der Quotient des Breitenmaßes zu der Breite des Spalts vorzugsweise von mindestens 1,0 bis höchstens 2,0 beträgt.

Eine Unterteilung der Schweißung in mehrere Teilschweißungen, und insbesondere das Beginnen mit einer Teilschweißung bei vergleichsweise kleiner Einwirkfläche mit danach zunehmend größerer Einwirkfläche, ermöglicht in vorteilhafter Weise eine Optimierung des Fließverhaltens des Materials im Spalt. Dabei wird der Spalt zunächst durch die erste Teilschweißung - und gegebenenfalls weitere, nachfolgende Teilschweißungen - aufgeweitet, sodass später, insbesondere bei nachfolgenden Teilschweißungen mit größerer Einwirkfläche, oberhalb der zunächst erzeugten Aufweitungszone aufgeschmolzenes Material in den aufgeweiteten Spalt nachfließen kann. Auf diese Weise können besonders große Aspektverhältnisse für die Laserschweißnaht erzielt werden. Insbesondere kann der Spalt mit der ersten Teilschweißung nach unten, also in Bestrahlungsrichtung, erweitert oder vertieft werden.

Eine variierende Einwirkfläche wird gemäß einer bevorzugten Ausgestaltung durch Variation des Strahl-Durchmessers des Laserstrahls erzeugt. Dabei kann insbesondere der Strahl-Durchmesser dem Durchmesser der Einwirkfläche entsprechen, und die Strahlfläche, die durch den Strahl-Durchmesser bestimmt ist, ist identisch mit der Einwirkfläche. Alternativ ist es möglich, dass die variierende Einwirkfläche durch eine der Verlagerung entlang des Spalt überlagerte Verlagerungsbewegung, insbesondere eine sogenannte Wobbelbewegung, des Laserstrahls erzeugt wird, sodass die Einwirkfläche aufgrund der Verlagerungsbewegung des Laserstrahls größer ist als der Strahl-Durchmesser. Um die Einwirkfläche zu vergrößern kann insbesondere die Amplitude dieser Verlagerungsbewegung, insbesondere der Wobbelbewegung, vergrößert werden. Die Verlagerungsbewegung zur Variation der Einwirkfläche weist dabei insbesondere eine höhere Verlagerungsgeschwindigkeit auf als die Verlagerung des Laserstrahls entlang des Spalts, sodass quasi instantan an einem Ort des Spalts eine gewünschte Einwirkfläche durch die der Verlagerung des Laserstrahls entlang des Spalts überlagerte Verlagerungsbewegung, insbesondere die Wobbelbewegung, erzeugt wird.

Gemäß einer Weiterbildung der Erfindung ist vorgesehen, dass die Leistung des Laserstrahls bei einer ersten Verlagerung des Laserstrahls entlang des Spalts verschieden ist von der Leistung des Laserstrahls bei einer zweiten Verlagerung des Laserstrahls entlang des Spalts, wenn der Laserstrahl mehrfach entlang des Spalts - insbesondere entlang derselben Verlagerungsstrecke - verlagert wird. Die Leistung wird bevorzugt von Verlagerung zu Verlagerung variiert. Insbesondere nimmt die Leistung vorzugsweise von jeder vorhergehenden Verlagerung einer Mehrzahl von Verlagerungen zu einer nachfolgenden Verlagerung der Mehrzahl von Verlagerungen zu. Vorzugsweise wird die Variation der Leistung so gewählt, dass sich eine konstante Leistungsdichte in den jeweiligen Einwirkflächen ergibt. Somit kann die Flächenleistung oder Leistungsdichte über die aufeinanderfolgenden Verlagerungen vorteilhaft konstant gehalten werden.

Gemäß einer Weiterbildung der Erfindung ist vorgesehen, dass als erstes Bauteil und/oder als zweites Bauteil ein dünnwandiges Bauteil mit einer Wandstärke von mindestens 0,1 mm bis höchstens 4 mm, vorzugsweise von mindestens 0,2 mm bis höchstens 3 mm, verwendet wird. Das hier vorgeschlagene Verfahren eignet sich in besonderer Weise zum Verschweißen dünnwandiger Bauteile, insbesondere für feinmechanische Anwendungen. Das dünnwandige Bauteil kann erfindungsgemäß bevorzugt ein Blech oder Rohr sein.

Besonders bevorzugt wird als erstes Bauteil ein dünnwandiges Bauteil, insbesondere Blech, mit einer Wandstärke von mindestens 0,1 mm bis höchstens 4 mm, vorzugsweise von mindestens 0,2 mm bis höchstens 3 mm, verwendet, wobei als zweites Bauteil ein Bauteil mit größerer Wandstärke als sie das erste Bauteil aufweist, insbesondere mit einer Wandstärke von mehr als 3 mm, insbesondere ein Blech, verwendet wird. Das hier vorgeschlagene Verfahren eignet sich in besonderer Weise zur Verbindung verschieden dicker oder starker Bauteile.

Gemäß einer Weiterbildung der Erfindung ist vorgesehen, dass als erstes Bauteil und/oder als zweites Bauteil ein dünnwandiges Rohr mit einer Wandstärke von mindestens 0,1 mm bis höchstens 4 mm, vorzugsweise von mindestens 0,2 mm bis höchstens 3 mm, verwendet wird. Besonders bevorzugt wird als erstes Bauteil ein dünnwandiges Rohr mit einer Wandstärke von mindestens 0,1 mm bis höchstens 4 mm, vorzugsweise von mindestens 0,2 mm bis höchstens 3 mm, verwendet, wobei als zweites Bauteil ein Flansch verwendet wird. Das hier vorgeschlagene Verfahren eignet sich in besonderer Weise zur Verbindung dünnwandiger Rohre mit - insbesondere vergleichsweise dickwandigen - Flanschen.

Gemäß einer besonders bevorzugten Ausgestaltung des Verfahrens wird wenigstens ein dünnwandiges Bauteil, insbesondere mit einer Wandstärke von mindestens 0,1 mm bis höchstens 4 mm, vorzugsweise von mindestens 0,2 mm bis höchstens 3 mm, mit einem weiteren Bauteil ohne Verwendung eines Zusatzwerkstoffs verschweißt.

Das Verfahren wird bevorzugt zum Verschweißen von wenigstens einem feinmechanischen Bauteil ohne Zusatzwerkstoff mit einem weiteren, bevorzugt ebenfalls feinmechanischen Bauteil angewendet.

Allgemein wird das Verfahren bevorzugt angewendet auf Bauteile, die ein oxidationsempfindliches Material aufweisen oder aus wenigstens einem oxidationsempfindlichen Material bestehen.

Mithilfe des Verfahrens sind glatte, saubere Schweißnähte ohne Spritzer darstellbar.

Das Verfahren wird besonders bevorzugt angewendet zum Herstellen gasdichter Schweißnähte bei dünnwandigen Rohren in Umfangsrichtung.

Insgesamt können mit dem hier offenbarten Verfahren zähe, hochwertige Schweißnähte erzeugt werden, die oxidfrei sind und insbesondere keine Versprödungen aufweisen. Die Schweißung kann zudem verzugsfrei, anlauffarbenfrei und schmauchfrei erfolgen. Vorteilhaft kann eine Festigkeit der Verbindung der beiden Bauteile im Bereich der Schweißnaht von mehr als 250 N erreicht werden.

Die Erfindung wird im Folgenden anhand der Zeichnung näher erläutert. Dabei zeigen:
- Figur 1: eine schematische Darstellung einer ersten Ausführungsform eines Verfahrens zum Fügen zweier Bauteile miteinander durch Laserschweißen;
- Figur 2: eine schematische Darstellung eines Ausführungsbeispiels einer Bauteil-Anordnung zweier mittels Laser-Wärmeleitungsschweißen miteinander gefügter Bauteile;
- Figur 3: eine schematische Darstellung einer zweiten Ausführungsform des Verfahrens;
- Figur 4: eine schematische Darstellung einer dritten Ausführungsform des Verfahrens, welche nicht unter den Schutzumfang der Ansprüche fällt;
- Figur 5: eine schematische Darstellung einer vierten Ausführungsform des Verfahrens, welche nicht unter den Schutzumfang der Ansprüche fällt; und
- Figur 6: eine schematische Darstellung einer fünften Ausführungsform des Verfahrens, welche nicht unter den Schutzumfang der Ansprüche fällt.

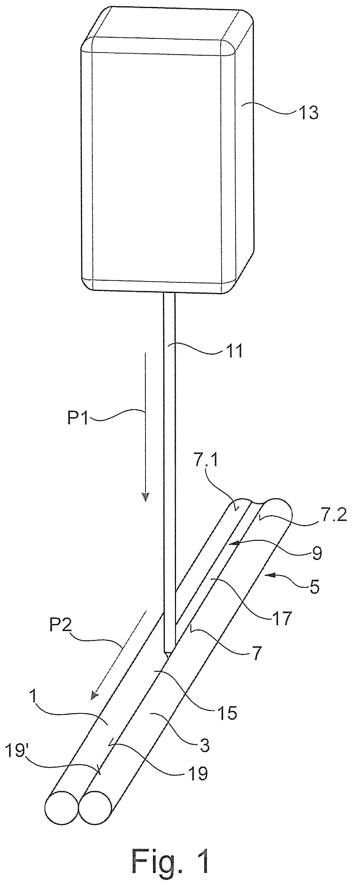

**Fig. 1** zeigt eine schematische Darstellung eines Verfahrens zum Fügen zweier Bauteile miteinander durch Laserschweißen, wobei ein erstes Bauteil 1 und ein zweites Bauteil 3 derart zu einer Bauteil-Anordnung 5 einander benachbart angeordnet werden, dass die Bauteil-Anordnung 5 eine Bestrahlungsfläche 7 aufweist, die eine erste Bestrahlungs-Teilfläche 7.1 an dem ersten Bauteil 1 und eine zweite Bestrahlungs-Teilfläche 7.2 an dem zweiten Bauteil 3 aufweist. Die Bestrahlungsfläche 7 wird dabei entlang einer hier durch einen ersten Pfeil P1 dargestellten Bestrahlungsrichtung in einem Fügebereich 9 mit einem Laserstrahl 11 bestrahlt. Dabei ist zur Erzeugung des Laserstrahls 11 hier eine Laserstrahlquelle 13, insbesondere ein Laser, vorgesehen. Die Laserstrahlquelle 13 kann auch eine letzte Auskoppeleinheit beispielsweise einer den Laserstrahl 11 führenden Glasfaser, ein letzter Spiegel, oder ein anderes strahlführendes oder strahlumlenkendes optisches Element vor dem Fügebereich 9 sein, ausgehend von dem der Laserstrahl 11 frei bis zu dem Fügebereich 9 propagiert. Die Bestrahlungsrichtung erstreckt sich dabei von der Laserstrahlquelle 13 in Richtung des Fügebereichs 9.

Der Laserstrahl 11 wird vorzugsweise relativ zu der Bauteil-Anordnung 5 entlang einer Längserstreckung der zu erzeugenden Laserschweißnaht bewegt. Alternativ oder zusätzlich kann die Bauteil-Anordnung 5 gegenüber dem - gegebenenfalls ortsfesten - Lasterstrahl 11 bewegt werden.

Die Bestrahlungsfläche 7 weist in dem Fügebereich 9 einen Spalt 15 auf, der sich ausgehend von der Bestrahlungsfläche 7 in Bestrahlungsrichtung verjüngt. Das erste Bauteil 1 und das zweite Bauteil 3 werden durch Wärmeleitungsschweißen miteinander gefügt.

Auf diese Weise ist es möglich, eine stabile, versprödungsfreie, insbesondere oxidfreie, Laserschweißnaht 17 auszubilden, deren Geometrie im Wesentlichen durch die Geometrie des Spalts 15 bestimmt ist. Dabei kann die Laserschweißnaht 17 insbesondere mit einer Tiefe erzeugt werden, die größer ist als ihre in der Bestrahlungsfläche 7 gemessene Breite, insbesondere auch mit einem Aspektverhältnis von größer als 2. Die Tiefe der Laserschweißnaht 17 erstreckt sich dabei ausgehend von der Bestrahlungsfläche 7 in Bestrahlungsrichtung gesehen in den Spalt 15 hinein.

Bei der hier gestellten Ausführungsform des Verfahrens ist der Spalt 15 symmetrisch an dem ersten Bauteil 1 und an dem zweiten Bauteil 3 ausgebildet. Dabei weist der Spalt 15 wenigstens eine abgerundete Wandung 19, 19' auf. Insbesondere weist der Spalt 15 hier zwei abgerundete Wandungen 19, 19' auf.

Insbesondere sind die Bauteile 1, 3 hier als Drähte, insbesondere als kreiszylindrische Drähte, ausgebildet, die entlang ihrer Längserstreckung nebeneinander angeordnet sind, sodass sie bestenfalls - wenn sie eng aneinander liegen - eine Linienberührung miteinander aufweisen. Sie können aber auch in einem geringen Abstand zueinander angeordnet sein. Das hier beschriebene Verfahren ist insoweit vorteilhaft, als der Spalt 15 zwischen den Drähten durch von deren Oberflächen abgeschmolzenes Material gefüllt wird, ohne dass das geschmolzene Material auf der Seite, welche der Laserstrahlquelle 13 abgewandt ist, austritt. Auf diese Weise kann eine sehr saubere, stabile und zugleich von beiden Seiten ästhetisch anmutende Befestigung der beiden Drähte aneinander erreicht werden. Insbesondere kann eine optische Qualität wie bei einer gelöteten Naht erreicht werden.

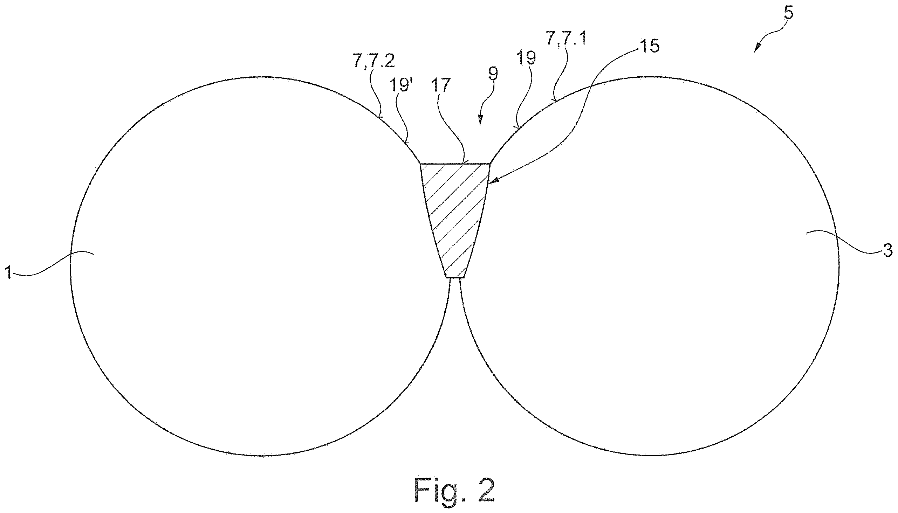

**Fig. 2** zeigt eine schematische Darstellung eines Ausführungsbeispiels einer Bauteil-Anordnung 5, insbesondere der im Rahmen des Verfahrens gemäß Figur 1 hergestellten Bauteil-Anordnung 5. Gleiche und funktionsgleiche Elemente sind mit gleichen Bezugszeichen versehen, sodass insofern auf die vorangegangene Beschreibung verwiesen wird. Figur 2 zeigt insbesondere eine Querschnitts-Darstellung der Bauteil-Anordnung 5, wie sie typischerweise auch für ein Schliffbild zur Beurteilung der Qualität der Laserschweißnaht 17 gewonnen wird. Das erste Bauteil 1 und das zweite Bauteil 3 sind dabei mittels Laser-Wärmeleitungsschweißen miteinander gefügt, wobei die Laserschweißnaht 17 in dem Fügebereich 9 der Bauteil-Anordnung 5 eine Tiefe aufweist, die größer ist als ihre Breite.

Anhand von Figur 2 zeigt sich auch, dass das von den Oberflächen und insbesondere den Wandungen 19, 19' des Spalts 15 abgeschmolze Material den Spalt 15 auffüllt, ohne dabei auf die der Laserstrahlquelle 13 bzw. hier der Laserschweißnaht 17 abgewandte Seite der Bauteil-Anordnung 5 zu gelangen.

Bevorzugt ist zumindest eines der Bauteile 1, 3 als Sinter-Bauteil, insbesondere als MIM-Bauteil hergestellt oder ausgebildet. Besonders bevorzugt sind beide Bauteile 1, 3 als Sinter-Bauteil, insbesondere als MIM-Bauteile hergestellt oder ausgebildet. Dabei verwirklichen sich in besonderer Weise die Vorteile des Verfahrens, da im Regime des Wärmeleitungsschweißens keine Störung durch Restgas aus Poren keine Oxidation von Restbinderanteilen zu befürchten ist. Zugleich kann eine sehr stabile Laserschweißnaht 17 erzeugt werden.

Bei der Ausführungsform gemäß Figur 1 des Verfahrens sowie dem Ausführungsbeispiel gemäß Figur 2 der Bauteil-Anordnung 5 wird besonders bevorzugt ein Drahtdurchmesser für die Bauteile 1, 3 von mindestens 1,0 mm bis höchstens 5,0 mm, vorzugsweise von 1,3 mm verwendet. Eine in der Bestrahlungsfläche 7 gemessene Breite der Laserschweißnaht 17 beträgt bevorzugt von mindestens 0,2 mm bis höchstens 3 mm, vorzugsweise 0,4 mm.

Es ist möglich, dass der Laserstrahl 11 im CW-Betrieb erzeugt wird. Insbesondere in diesem Fall beträgt eine Vorschubgeschwindigkeit entlang einer in Figur 1 durch einen zweiten Pfeil P2 dargestellten Längserstreckung der Laserschweißnaht 17 vorzugsweise von mindestens 5 m/min bis höchstens 15 m/min, besonders bevorzugt 12 m/min. Die Laserleistung des Laserstrahls 11 beträgt bevorzugt von mindestens 250 W bis höchstens 5 kW, vorzugsweise 750 W.

Der Laserstrahl 11 wird bevorzugt mit einer Wellenlänge von mindestens 400 nm bis höchstens 1200 nm, vorzugsweise von mindestens 920 nm bis höchstens 1064 nm, insbesondere 532 nm, 515 nm oder 450 nm, erzeugt.

Es ist auch möglich, dass der Laserstrahl 11 in einem Pulsbetrieb erzeugt wird.

Insbesondere ist eine Bestrahlung der Bestrahlungsfläche 7 durch den Laserstrahl 11 in einem getakteten Betrieb oder in einem kontinuierlichen Betrieb möglich.

Der Laserstrahl 11 wird bevorzugt mit einem Strahl-Durchmesser von mindestens 0,2 mm bis höchstens 2,5 mm, besonders bevorzugt von 0,4 mm, erzeugt.

Der Laserstrahl 11 wird bevorzugt mittels eines Lasers erzeugt, der ausgewählt ist aus einer Gruppe bestehend aus einem Diodenlaser, einem Faserlaser, einem Nd:YAG-Laser, und einem Scheibenlaser, insbesondere einem diodengepumpten Scheibenlaser.

Wenigstens ein Bauteil, ausgewählt aus dem ersten Bauteil 1 und dem zweiten Bauteil 3, weist bevorzugt ein Material auf oder besteht aus einem Material, das ausgewählt ist aus einer Gruppe bestehend aus Neusilber, INOX, insbesondere INOX 316L, Kupfer oder einer Kupferlegierung, und Titan. Besonders bevorzugt weisen beide Bauteile 1, 3 ein solches Material auf oder bestehen aus einem solchen Material.

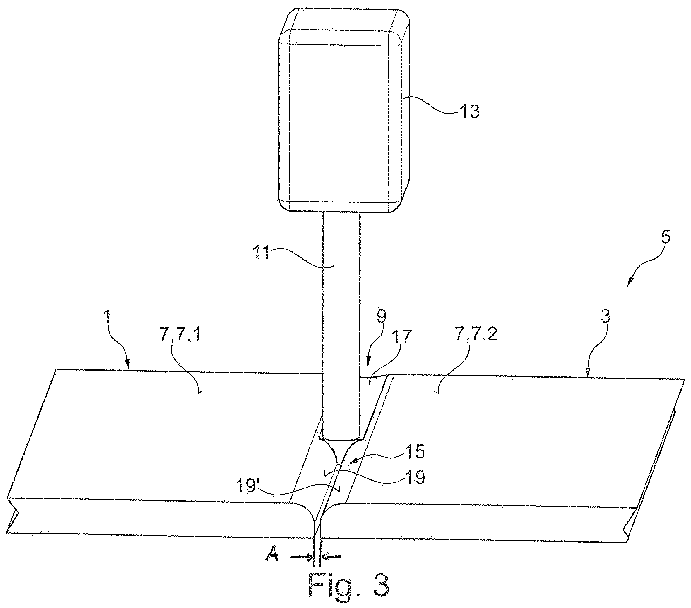

**Fig. 3** zeigt eine schematische Darstellung einer zweiten Ausführungsform des Verfahrens. Gleiche und funktionsgleiche Elemente sind mit gleichen Bezugszeichen versehen, sodass insofern auf die vorangegangene Beschreibung verwiesen wird. Die Bauteile 1, 3 sind hier als Bleche ausgebildet, wobei der Spalt 15 zwei jeweils abgerundete Wandungen 19, 19' aufweist. Die abgerundeten Wandlungen 19, 19' können verschiedene Radien oder einen gleichen Radius aufweisen.

Bevorzugt beträgt wenigstens ein Radius von einer der abgerundeten Wandungen 19, 19' von mindestens 0,1 mm bis höchstens 5 mm; vorzugsweise von mindestens 0,3 mm bis höchstens 5 mm; vorzugsweise bis höchstens 4,5 mm, vorzugsweise bis höchstens 4 mm; vorzugsweise bis höchstens 3,5 mm; vorzugsweise bis höchstens 3 mm; vorzugsweise bis höchstens 2,7 mm; vorzugsweise von mindestens 0,4 mm bis höchstens 2,6 mm; vorzugsweise von mindestens 0,5 mm bis höchstens 2,5 mm; vorzugsweise von mindestens 0,6 mm bis höchstens 2,4 mm; vorzugsweise von mindestens 0,7 mm bis höchstens 2,3 mm; vorzugsweise von mindestens 0,8 mm bis höchstens 2,2 mm; vorzugsweise von mindestens 0,9 mm bis höchstens 2,1 mm; vorzugsweise von mindestens 1,0 mm bis höchstens 2,0 mm; vorzugsweise von mindestens 1,1 mm bis höchstens 1,9 mm; vorzugsweise von mindestens 1,2 mm bis höchstens 1,8 mm; vorzugsweise von mindestens 1,3 mm bis höchstens 1,7 mm; vorzugsweise von mindestens 1,4 mm bis höchstens 1,6 mm; vorzugsweise 1,5 mm, vorzugsweise 0,65 mm.

Die Bauteile 1, 3 sind hier insbesondere in einem Abstand A, insbesondere einem minimalen Abstand A, zueinander angeordnet, der von mindestens 0 mm bis höchstens 0,3 mm, vorzugsweise bis höchstens 0,25 mm, vorzugsweise bis höchstens 0,2 mm, vorzugsweise bis höchstens 0,1 mm, vorzugsweise mindestens 0,01 mm, vorzugsweise mindestens 0,05 mm, beträgt. In bevorzugter Ausgestaltung wird der Abstand A gezielt in diesem Bereich gewählt.

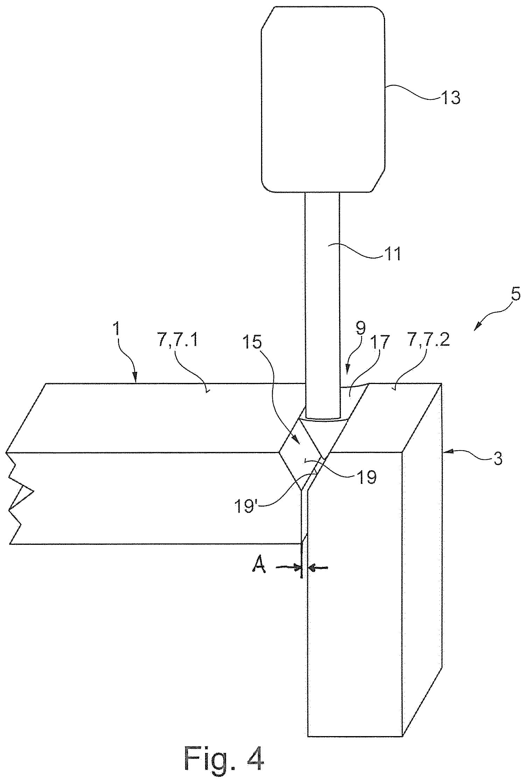

**Fig. 4** zeigt eine schematische Darstellung einer dritten Ausführungsform des Verfahrens, welche nicht unter den Schutzumfang der Ansprüche fällt.

Gleiche und funktionsgleiche Elemente sind mit gleichen Bezugszeichen versehen, sodass insofern auf die vorangegangene Beschreibung verwiesen wird. Die Bauteile 1, 3 sind hier über Eck und somit senkrecht zueinander angeordnet. Der Spalt 15 weist wenigstens eine ebene Schrägwandung, hier zwei Schrägwandungen in Form der schrägen Wandungen 19, 19' auf. Diese werden bevorzugt bereitgestellt, indem die Bauteile 1, 3 entsprechend angefast sind. Auch bei dem hier dargestellten Ausführungsbeispiel ist der Spalt symmetrisch an dem ersten Bauteil 1 und an dem zweiten Bauteil 3 ausgebildet.

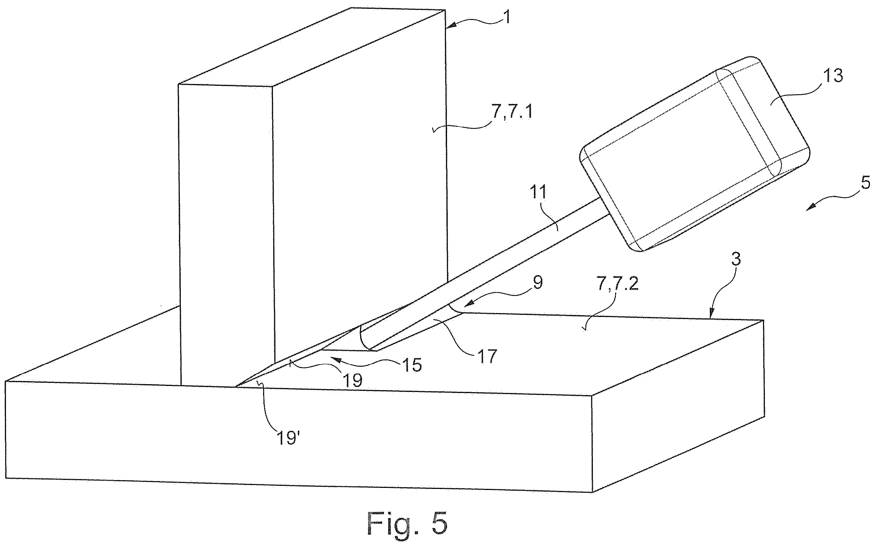

**Fig. 5** zeigt eine schematische Darstellung einer vierten Ausführungsform des Verfahrens, welche nicht unter den Schutzumfang der Ansprüche fällt.

Gleiche und funktionsgleiche Elemente sind mit gleichen Bezugszeichen versehen, sodass insofern auf die vorangegangene Beschreibung verwiesen wird. Während in den zuvor dargestellten Figuren bei den dort dargestellten Ausführungsformen und Ausführungsbeispielen die Bestrahlungs-Teilflächen 7.1, 7.2 parallel zueinander angeordnet waren und miteinander fluchteten, sind diese nun bei dem in Figur 5 dargestellten Ausführungsbeispiel über Eck, insbesondere in einem Winkel von 90° zueinander angeordnet, sodass die Bestrahlungsfläche 7 insgesamt nicht eben ausgebildet ist.

Der Spalt 15 ist hier einseitig an einem der Bauteile 1, 3 - hier an dem ersten Bauteil 1 - ausgebildet, wobei er nur eine ebene Schrägwandung, nämlich die als Fase ausgebildete erste Wandung 19 aufweist. Die zweite Wandung 19' des Spalts 15 wird hier ohne jegliche Abschrägung oder Anfasung durch die ebene, zweite Bestrahlungs-Teilfläche 7.2 des zweiten Bauteils 3 gebildet.

Der Spalt 15 ist dabei insbesondere als Kehlnaht ausgebildet.

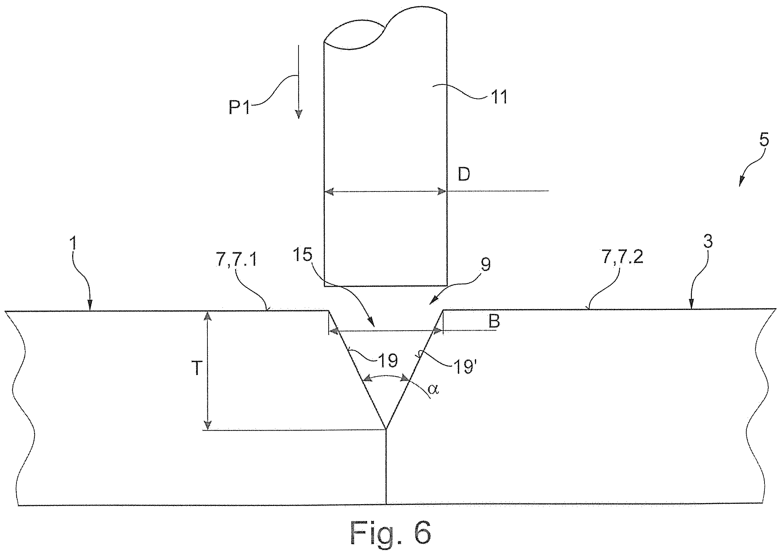

**Fig. 6** zeigt eine schematische Darstellung einer fünften Ausführungsform des Verfahrens, welche nicht unter den Schutzumfang der Ansprüche fällt.

Gleiche und funktionsgleiche Elemente sind mit gleichen Bezugszeichen versehen, sodass insofern auf die vorangegangene Beschreibung verwiesen wird. Dabei sind hier schematisch folgende Parameter dargestellt: Ein Strahl-Breitenmaß oder Durchmesser D des Laserstrahls 11, eine in der Bestrahlungsfläche 7 senkrecht zur Längserstreckung der Laserschweißnaht 17 gemessene Breite B des Spalts 15, eine in Bestrahlungsrichtung ausgehend von der Bestrahlungsfläche 7 gemessene Tiefe T des Spalts 15, und ein voller Öffnungswinkel α des Spalts 15.

Bevorzugt beträgt ein Quotient des Strahl-Durchmessers D zu der Breite B des Spalts 15 von mindestens 0,2 bis höchstens 2,0; vorzugsweise von mindestens 0,3 bis höchstens 2,0; vorzugsweise von mindestens 0,4 bis höchstens 2,0; vorzugsweise von mindestens 0,5 bis höchstens 2,0; vorzugsweise von mindestens 0,6 bis höchstens 1,9; vorzugsweise von mindestens 0,7 bis höchstens 1,8; vorzugsweise bis höchstens 1,7; vorzugsweise bis höchstens 1,6; vorzugsweise von mindestens 0,8 bis höchstens 1,5; vorzugsweise von mindestens 0,9 bis höchstens 1,4; vorzugsweise von mindestens 1,0 bis höchstens 1,3; vorzugsweise 1,2.

Der volle Öffnungswinkel α des Spalts 15 beträgt bevorzugt von mindestens 15° bis höchstens 60°; vorzugsweise von mindestens 20° bis höchstens 55°; vorzugsweise von mindestens 30° bis höchstens 45°; vorzugsweise von mindestens 35° bis höchstens 40°; vorzugsweise 37°.

Ein Quotient der Tiefe T des Spalts 15 zu dessen Breite B beträgt bevorzugt von mindestens 0,2, vorzugsweise von mindestens 0,3, vorzugsweise von mindestens 0,5, vorzugsweise von mindestens 0,6 bis höchstens 3,2; vorzugsweise von mindestens 0,7 bis höchstens 3,1; vorzugsweise von mindestens 0,8 bis höchstens 3,0; vorzugsweise von mindestens 0,9 bis höchstens 2,9; vorzugsweise von mindestens 1,0 bis höchstens 2,8; vorzugsweise von mindestens 1,2 bis höchstens 2,6; vorzugsweise von mindestens 1,4 bis höchstens 2,4; vorzugsweise von mindestens 1,6 bis höchstens 2,2; vorzugsweise von mindestens 1,8 bis höchstens 2,0; vorzugsweise 1,9.

Eine in der Bestrahlungsfläche 7 senkrecht zur Längserstreckung der Laserschweißnaht 17 gemessene Breite der Laserschweißnaht 17 beträgt bevorzugt von mindestens 0,1 mm bis höchstens 3 mm; vorzugsweise von mindestens 0,2 mm bis höchstens 0,8 mm; vorzugsweise von mindestens 0,3 mm bis höchstens 0,7 mm; vorzugsweise von mindestens 0,4 mm bis höchstens 0,6 mm; vorzugsweise 0,5 mm oder 0,4 mm.

Es ist möglich, dass der Laserstrahl 11 einmalig oder mehrfach - insbesondere zeitlich nacheinander - entlang des Spalts 15 relativ zu der Bauteil-Anordnung 5 verlagert wird. Bei einer mehrfachen Verlagerung entlang derselben Verlagerungsstrecke entlang des Spalts 15 kann eine Variation einer Einwirkfläche des Laserstrahls 11 auf die Bauteile 1, 3 - insbesondere durch eine Variation einer der Verlagerung entlang des Spalts 15 überlagerten Wobbelbewegung und/oder durch eine Variation des Strahl-Durchmessers D - vorgesehen sein. Insbesondere kann die Einwirkfläche von Verlagerung zu Verlagerung zunehmen. Alternativ oder zusätzlich kann eine Variation einer Leistung des Laserstrahls 11 bei einer mehrfachen Verlagerung, insbesondere von Verlagerung zu Verlagerung, vorgesehen sein. Dabei wird bevorzugt eine Flächenleistung oder Leistungsdichte des Laserstrahls in der - vorzugsweise variierenden - Einwirkfläche konstant gehalten.

Bei einem konkreten Ausführungsbeispiel ist es möglich, dass der Laserstrahl 11 bei einer ersten Verlagerung entlang des Spalts 15 eine Einwirkfläche mit einem Durchmesser von 0,15 mm aufweist, wobei die Einwirkfläche bei einer zweiten Verlagerung entlang derselben Verlagerungsstrecke einen Durchmesser von 0,3 mm und bei einer dritten Verlagerung einen Durchmesser von 0,5 mm aufweist. Dabei wird vorzugsweise die Flächenleistung oder Leistungsdichte des Laserstrahls 11 konstant gehalten.

Vorzugsweise werden das erste Bauteil und das zweite Bauteil ohne einen Zusatzwerkstoff und/oder Schutzgas miteinander gefügt. Besonders bevorzugt handelt es sich bei wenigstens einem Bauteil 1, 3 um ein feinmechanisches Bauteil, wobei besonders bevorzugt in diesem Fall die Bauteile 1, 3 ohne einen Zusatzwerkstoff oder ohne Schutzgas miteinander gefügt werden.

In dem getakteten Betrieb beträgt die Vorschubgeschwindigkeit bevorzugt mindestens 0,25 m/min, vorzugsweise von mindestens 0,5 m/min bis höchstens 3 m/min, vorzugsweise bis höchstens 1 m/min; in dem kontinuierlichen Betrieb beträgt sie bevorzugt von mindestens 3 m/min bis höchstens 30 m/min.

Insgesamt kann mit dem hier vorgeschlagenen Verfahren eine stabile, geometrisch genau definierte Laserschweißnaht 17 im Regime Wärmeleitungsschweißens erzeugt werden, wobei sich die hier vorgeschlagene Bauteil-Anordnung 5 durch eine entsprechend stabile und versprödungsfreie Laserschweißnaht 17 auszeichnet.

## Patentansprüche

1. Verfahren zum Fügen zweier Bauteile (1,3) miteinander durch Laserschweißen, wobei
- ein erstes Bauteil (1) und ein zweites Bauteil (3) derart zu einer Bauteil-Anordnung (5) einander benachbart angeordnet werden, dass
- die Bauteil-Anordnung (5) eine Bestrahlungsfläche (7) aufweist, die eine erste Bestrahlungs-Teilfläche (7.1) an dem ersten Bauteil (1) und eine zweite Bestrahlungs-Teilfläche (7.2) an dem zweiten Bauteil (3) aufweist, wobei
- die Bestrahlungsfläche (7) entlang einer Bestrahlungsrichtung in einem Fügebereich (9) mit einem Laserstrahl (11) bestrahlt wird, wobei
- die Bestrahlungsfläche (7) in dem Fügebereich (9) einen Spalt (15) aufweist, der sich ausgehend von der Bestrahlungsfläche (7) in Bestrahlungsrichtung verjüngt, wobei
- der Spalt (15) wenigstens eine abgerundete Wandung (19, 19') aufweist,
**dadurch gekennzeichnet, dass**
- das erste Bauteil (1) und das zweite Bauteil (3) durch Wärmeleitungsschweißen ohne einen Zusatzwerkstoff miteinander gefügt werden, wobei
- ein minimaler Abstand zwischen dem ersten Bauteil (1) und dem zweiten Bauteil (3) zu mindestens 0,01 mm bis höchstens 0,3 mm gewählt wird, wobei
- ein Quotient eines Strahl-Breitenmaßes (D) des Laserstrahls (11) zu einer in der Bestrahlungsfläche (7) gemessenen Breite (B) des Spalts (15) von mindestens 0,2 bis höchstens 2,0 beträgt, und wobei
- durch das Wärmeleitungsschweißen eine Laserschweißnaht (17) erzeugt wird, deren in Bestrahlungsrichtung gemessene Tiefe größer ist als ihre in der Bestrahlungsfläche (7) senkrecht zur Längserstreckung der Laserschweißnaht (17) gemessene Breite.

2. Verfahren nach Anspruch 1, **dadurch gekennzeichnet, dass** durch den Laserstrahl (11) Material von Wandungen des Spalts (15) abgeschmolzen wird, so dass das abgeschmolzene Material in den sich verjüngenden Spalt (15) hineinfließt und den Spalt (15) von einer der Bestrahlungsfläche (7) abgewandten Seite des Spalts (15) her auffüllt.

3. Verfahren nach einem der vorhergehenden Ansprüche, **dadurch gekennzeichnet, dass** der minimale Abstand zwischen dem ersten Bauteil (1) und dem zweiten Bauteil (3) bis höchstens 0,25 mm gewählt wird.

4. Verfahren nach einem der vorhergehenden Ansprüche, **dadurch gekennzeichnet, dass** der Quotient des Strahl-Breitenmaßes (D) des Laserstrahls (11) zu der in der Bestrahlungsfläche (7) gemessenen Breite (B) des Spalts (15) mindestens 0,3, insbesondere mindestens 0,4, insbesondere bis höchstens 1,5, insbesondere bis höchstens 1,2 beträgt.

5. Verfahren nach einem der vorhergehenden Ansprüche, **dadurch gekennzeichnet, dass** der Spalt (15)
a) symmetrisch an dem ersten Bauteil (1) und an dem zweiten Bauteil (3), oder
b) einseitig an einem Bauteil (1,3), ausgewählt aus dem ersten Bauteil (1) und dem zweiten Bauteil (3);
ausgebildet ist; oder dass der Spalt (15)
c) eine ebene Schrägwandung aufweist.

6. Verfahren nach einem der vorhergehenden Ansprüche, **dadurch gekennzeichnet, dass**
a) die wenigstens eine abgerundete Wandung (19,19') einen Radius von mindestens 0,1 mm bis höchstens 5 mm aufweist, und/oder dass
b) ein Quotient einer in Bestrahlungsrichtung von der Bestrahlungsfläche (7) ausgehend gemessenen Tiefe (T) des Spalts (15) zu der in der Bestrahlungsfläche (7) gemessenen Breite (B) des Spalts (15) mindestens 0,2 beträgt.

7. Verfahren nach einem der vorhergehenden Ansprüche, **dadurch gekennzeichnet, dass** der Laserstrahl (11)
a) in einem CW-Betrieb, oder
b) in einem Pulsbetrieb, und/oder
c) mit einem Strahl-Durchmesser (D) von mindestens 0,1 mm bis höchstens 2,5 mm, und/oder
d) mit einer Leistung von mindestens 50 W bis höchstens 5 kW, und/oder
e) mit einer Wellenlänge von mindestens 400 nm bis höchstens 1200 nm erzeugt wird, und/oder
f) mit einer Vorschubgeschwindigkeit von mindestens 0,25 m/min entlang des Spalts relativ zu der Bauteil-Anordnung verlagert wird.

8. Verfahren nach einem der vorhergehenden Ansprüche, **dadurch gekennzeichnet, dass** der Laserstrahl (11) mittels eines Lasers erzeugt wird, der ausgewählt ist aus einer Gruppe bestehend aus einem Diodenlaser, einem Faserlaser, einem Nd:YAG-Laser, und einem Scheibenlaser.

9. Verfahren nach einem der vorhergehenden Ansprüche, **dadurch gekennzeichnet, dass** wenigstens ein Bauteil (1,3), ausgewählt aus dem ersten Bauteil (1) und dem zweiten Bauteil (3),
a) wenigstens ein Material aufweist oder aus einem Material besteht, das ausgewählt ist aus einer Gruppe bestehend aus Neusilber, INOX, Kupfer oder einer Kupferlegierung, und Titan, und/oder
b) als Sinter-Bauteil, insbesondere als MIM-Bauteil, hergestellt ist.

10. Verfahren nach einem der vorhergehenden Ansprüche, **dadurch gekennzeichnet, dass** eine Laserschweißnaht (17) erzeugt wird, wobei eine in der Bestrahlungsfläche (7) senkrecht zur Längserstreckung der Laserschweißnaht (17) gemessene Breite der Laserschweißnaht (17) von mindestens 0,1 mm bis höchstens 3 mm beträgt.

11. Verfahren nach einem der vorhergehenden Ansprüche, **dadurch gekennzeichnet, dass** der Laserstrahl (11) mehrfach entlang des Spalts (15) relativ zu der Bauteil-Anordnung (5) verlagert wird.

12. Verfahren nach Anspruch 11, **dadurch gekennzeichnet, dass**
- eine Einwirkfläche des Laserstrahls (11), in welcher der Laserstrahl (11) mit dem ersten Bauteil (1) und dem zweiten Bauteil (3) in Wechselwirkung tritt, bei wenigstens zwei Verlagerungen des Laserstrahls (11) entlang des Spalts (15) verschieden ist, wobei insbesondere die Größe der Einwirkfläche von einer ersten Verlagerung zu einer nächsten Verlagerung des Laserstrahls (11) zunimmt, wobei insbesondere ein Breitenmaß der Einwirkfläche bei der ersten Verlagerung des Laserstrahls (11) einer Mehrzahl von Verlagerungen kleiner ist als die Breite des Spalts (15), und/oder dass
- eine Leistung des Laserstrahls (11) bei einer ersten Verlagerung des Laserstrahls (11) entlang des Spalts (15) verschieden ist von der Leistung des Laserstrahls (11) bei einer zweiten Verlagerung des Laserstrahls (11) entlang des Spalts (15), wobei die Leistung insbesondere von jeder vorhergehenden Verlagerung einer Mehrzahl von Verlagerungen zu einer nachfolgenden Verlagerung der Mehrzahl von Verlagerungen zunimmt, wobei
- insbesondere die Variation der Leistung so gewählt wird, dass sich eine konstante Leistungsdichte in den jeweiligen Einwirkflächen ergibt, wobei insbesondere die Leistungsdichte über die aufeinanderfolgenden Verlagerungen konstant gehalten wird.

13. Verfahren nach einem der vorhergehenden Ansprüche, **dadurch gekennzeichnet, dass** als erstes Bauteil (1) und/oder als zweites Bauteil (3) ein Bauteil mit einer Wandstärke von mindestens 0,1 mm bis höchstens 4 mm verwendet wird.

## Claims

1. Method of joining two components (1, 3) to one another by laser welding, wherein
- a first component (1) and a second component (3) are arranged adjacent to one another in a component arrangement (5) in such a way that
- the component arrangement (5) has an irradiation surface (7) comprising a first irradiation partial surface (7.1) on the first component (1) and a second irradiation partial surface (7.2) on the second component (3), wherein
- the irradiation surface (7) is irradiated with a laser beam (11) along an irradiation direction in a joining region (9), wherein
- the irradiation surface (7) has a gap (15) in the joining region (9) which, starting from the irradiation surface (7), tapers in the irradiation direction, wherein
- the gap (15) comprises at least one rounded wall (19, 19'),
**characterised in that**
- the first component (1) and the second component (3) are joined to one another by heat conduction welding without an additional active substance, wherein
- a minimum distance between the first component (1) and the second component (3) is selected to be at least 0.01 mm to at most 0.3 mm, wherein
- a quotient of a beam width dimension (D) of the laser beam (11) to a width (B) of the gap (15) measured in the irradiation surface (7) is at least 0.2 to at most 2.0, and wherein
- a laser weld seam (17) is produced by the heat conduction welding, wherein a depth of the laser weld seam (17), measured in the irradiation direction, is greater than its width, measured in the irradiation surface (7) perpendicular to the longitudinal extension of the laser weld seam (17).

2. Method according to claim 1, **characterised in that** material is melted from walls of the gap (15) by the laser beam (11) such that the melted material flows into the tapered gap (15) and fills the gap (15) from a side of the gap (15) facing away from the irradiation surface (7).

3. Method according to one of the preceding claims, **characterised in that** the minimum distance between the first component (1) and the second component (3) is selected to at most 0.25 mm.

4. Method according to one of the preceding claims, **characterised in that** the quotient of the beam width dimension (D) of the laser beam (11) to the width (B) of the gap (15) measured in the irradiation surface (7) is at least 0.3, in particular at least 0.4, in particular to at most 1.5, in particular to at most 1.2.

5. Method according to one of the preceding claims, **characterised in that** the gap (15) is formed
a) symmetrically on the first component (1) and on the second component (3), or
b) on one side of a component (1, 3) selected from the first component (1) and the second component (3);
or that the gap (15)
c) comprises at least one flat sloping wall.

6. Method according to one of the preceding claims, **characterised in that**
a) the at least one rounded wall (19, 19') has a radius of at least 0.1 mm to at most of 5 mm, and/or **in that**
b) a quotient of a depth (T) of the gap (15) measured from the irradiation surface (7) in the irradiation direction to the width (B) of the gap (15) measured in the irradiation surface (7) is at least 0.2.

7. Method according to one of the preceding claims, **characterised in that** the Laser beam (11) is generated
a) in a CW mode, or
b) in a pulsed mode, and/or
c) with a beam diameter (D) of at least 0.1 mm to at most 2.5 mm, and/or
d) with a power output of at least 50 W to at most 5 kW, and/or
e) with a wavelength of at least 400 nm to at most 1200 nm, and/or
f) is shifted with a feed rate of at least 0.25 m/min along the gap relative to the component arrangement.

8. Method according to one of the preceding claims, **characterised in that** the laser beam (11) is generated by means of a laser selected from a group consisting of a diode laser, a fiber laser, a Nd:YAG laser, and a disk laser.

9. Method according to one of the preceding claims, **characterised in that** at least one component (1, 3) selected from the first component (1) and the second component (3),
a) comprises at least one material or consists of a material selected from a group consisting of nickel silver, INOX, copper or a copper alloy, and titanium, and/or
b) is manufactured as a sintered component, in particular as a MIM component.

10. Method according to one of the preceding claims, **characterised in that** a laser weld seam (17) is produced, wherein a width of the laser weld seam (17) measured in the irradiation surface (7) perpendicular to the longitudinal extension of the laser weld seam (17) is at least 0.1 mm to at most 3 mm.

11. Method according to one of the preceding claims, **characterised in that** the laser beam (11) is displaced several times along the gap (15) relative to the component arrangement (5).

12. Method according to claim 11, **characterised in that**
- an impact area of the laser beam (11) in which the laser beam (11) interacts with the first component (1) and the second component (3) is different for at least two displacements of the laser beam (11) along the gap (15), wherein in particular the size of the impact region increases from a first displacement to a subsequent displacement of the laser beam (11), wherein in particular a width dimension of the impact region at the first displacement of the laser beam (11) of a plurality of displacements is smaller than the width of the gap (15), and/or **in that**
- a power of the laser beam (11) at a first displacement of the laser beam (11) along the gap (15) is different from the power of the laser beam (11) at a second displacement of the laser beam (11) along the gap (15), wherein the power increases in particular from each preceding displacement of a plurality of displacements to a subsequent displacement of the plurality of displacements, wherein
- in particular the variation of the power is selected in such a way that a constant power density is obtained in the respective impact areas, wherein in particular the power density is kept constant over the successive displacements.

13. Method according to one of the preceding claims, **characterised in that** as first component (1) and/or as second component (3) a component with a wall thickness of at least 0.1 mm to at most 4 mm is used.

## Revendications

1. Procédé pour l'assemblage de deux parties structurales (1, 3) l'une avec l'autre par soudage au laser, dans lequel
- une première partie structurale (1) et une deuxième partie structurale (3) sont disposées de manière adjacente l'une à l'autre en un agencement de parties structurales (5) de telle sorte que
- l'agencement de parties structurales (5) présente une surface de rayonnement (7), laquelle comprend une première surface partielle de rayonnement (7.1) au niveau de la première partie structurale (1) et une deuxième surface partielle de rayonnement (7.2) au niveau de la deuxième partie structurale (3), dans lequel
- la surface de rayonnement (7) est exposée à un faisceau laser (11) le long d'une direction de rayonnement dans une zone d'assemblage (9), dans lequel
- la surface de rayonnement (7) comprend dans la zone d'assemblage (9) une fente (15) qui s'effile à partir de la surface de rayonnement (7) dans la direction de rayonnement, dans lequel
- la fente (15) comprend au moins une paroi arrondie (19, 19'),
**caractérisé en ce que**
- la première partie structurale (1) et la deuxième partie structurale (3) sont assemblées l'une avec l'autre par soudage par conduction thermique sans matière d'apport, dans lequel
- une distance minimale entre la première partie structurale (1) et la deuxième partie structurale (3) allant de 0,01 mm au moins à 0,3 mm au plus est sélectionnée, dans lequel
- un quotient d'une mesure de largeur de faisceau (D) du faisceau laser (11) par une largeur (B) de la fente (15) mesurée dans la surface de rayonnement (7) s'élève à une valeur allant de 0,2 au moins à 2,0 au plus, et dans lequel
- une soudure au laser (17), dont la profondeur mesurée dans la direction de rayonnement est supérieure à sa largeur mesurée dans la surface de rayonnement (7) perpendiculairement à l'étendue longitudinale de la soudure au laser (17), est produite par le soudage par conduction thermique.

2. Procédé selon la revendication 1, **caractérisé en ce que** du matériau des parois de la fente (15) est fondu par le faisceau laser (11), de sorte que le matériau fondu s'écoule dans la fente (15) qui s'effile, et remplit la fente (15) depuis un côté de la fente (15) opposé à la surface de rayonnement (7).

3. Procédé selon l'une des revendications précédentes, **caractérisé en ce que** la distance minimale entre la première partie structurale (1) et la deuxième partie structurale (3) est sélectionnée comme allant jusqu'à 0,25 mm au plus.

4. Procédé selon l'une des revendications précédentes, **caractérisé en ce que** le quotient de la mesure de largeur de faisceau (D) du faisceau laser (11) par la largeur (B) de la fente (15) mesurée dans la surface de rayonnement (7) s'élève à 0,3 au moins, en particulier à 0,4 au moins, en particulier jusqu'à 1,5 au plus, en particulier jusqu'à 1,2 au plus.

5. Procédé selon l'une des revendications précédentes, **caractérisé en ce que** la fente (15)
a) est conçue symétriquement au niveau de la première partie structurale (1) et au niveau de la deuxième partie structurale (3), ou
b) est conçue unilatéralement au niveau d'une partie structurale (1, 3) sélectionnée parmi la première partie structurale (1) et la deuxième partie structurale (3) ;
ou bien **en ce que** la fente (15)
c) comprend une paroi oblique plane.

6. Procédé selon l'une des revendications précédentes, **caractérisé en ce que**
a) l'au moins une paroi arrondie (19, 19') présente un rayon allant de 0,1 mm au moins à 5 mm au plus, et/ou **en ce que**
b) un quotient d'une profondeur (T) de la fente (15) mesurée dans la direction de rayonnement à partir de la surface de rayonnement (7) par la largeur (B) de la fente (15) mesurée dans la surface de rayonnement (7) s'élève à 0,2 au moins.

7. Procédé selon l'une des revendications précédentes, **caractérisé en ce que** le faisceau laser (11) est produit
a) dans un fonctionnement en continu, ou
b) dans un fonctionnement pulsé, et/ou
c) avec un diamètre de faisceau (D) allant de 0,1 mm au moins à 2,5 mm au plus, et/ou
d) avec une puissance allant de 50 W au moins à 5 kW au plus, et/ou
e) avec une longueur d'onde allant de 400 nm au moins à 1 200 nm au plus, et/ou
est déplacé
f) avec une vitesse d'avance de 0,25 m/min au moins le long de la fente par rapport à l'agencement de parties structurales.

8. Procédé selon l'une des revendications précédentes, **caractérisé en ce que** le faisceau laser (11) est produit au moyen d'un laser qui est sélectionné dans un groupe constitué d'un laser à diode, d'un laser à fibre, d'un laser Nd : YAG, et d'un laser à disque.

9. Procédé selon l'une des revendications précédentes, **caractérisé en ce qu'**au moins une partie structurale (1, 3), sélectionnée parmi la première partie structurale (1) et la deuxième partie structurale (3),
a) comprend au moins un matériau ou est constituée d'un matériau qui est sélectionné dans un groupe constitué du maillechort, de l'INOX, du cuivre ou d'un alliage de cuivre, et du titane, et/ou
b) est fabriquée sous la forme d'une partie structurale frittée, en particulier sous la forme d'une partie structurale MIM.

10. Procédé selon l'une des revendications précédentes, **caractérisé en ce qu'**une soudure au laser (17) est produite, dans lequel une largeur de la soudure au laser (17) mesurée dans la surface de rayonnement (7) perpendiculairement à l'étendue longitudinale de la soudure au laser (17) s'élève à une valeur allant de 0,1 mm au moins à 3 mm au plus.

11. Procédé selon l'une des revendications précédentes, **caractérisé en ce que** le faisceau laser (11) est déplacé plusieurs fois le long de la fente (15) par rapport à l'agencement de parties structurales (5).

12. Procédé selon la revendication 11, **caractérisé en ce que**
- une surface d'impact du faisceau laser (11), dans laquelle le faisceau laser (11) interagit avec la première partie structurale (1) et la deuxième partie structurale (3), est différente lors d'au moins deux déplacements du faisceau laser (11) le long de la fente (15), dans lequel en particulier la taille de la surface d'impact augmente d'un premier déplacement à un déplacement suivant du faisceau laser (11), dans lequel en particulier une mesure de largeur de la surface d'impact lors du premier déplacement du faisceau laser (11) d'une pluralité de déplacements est inférieure à la largeur de la fente (15), et/ou **en ce que**
- une puissance du faisceau laser (11) lors d'un premier déplacement du faisceau laser (11) le long de la fente (15) est différente de la puissance du faisceau laser (11) lors d'un deuxième déplacement du faisceau laser (11) le long de la fente (15), dans lequel la puissance augmente en particulier de chaque déplacement précédent d'une pluralité de déplacements à un déplacement suivant de la pluralité de déplacements, dans lequel
- en particulier la variation de la puissance est sélectionnée de telle sorte qu'il en résulte une densité de puissance constante dans les surfaces d'impact respectives, dans lequel en particulier la densité de puissance est maintenue constante au cours des déplacements successifs.

13. Procédé selon l'une des revendications précédentes, **caractérisé en ce que**, en tant que première partie structurale (1) et/ou en tant que deuxième partie structurale (3), une partie structurale avec une épaisseur de paroi allant de 0,1 mm au moins à 4 mm au plus est utilisée.
